# EUROPÄISCHE PATENTSCHRIFT

(11) **EP 4 368 411 B1**
(45) Veröffentlichungstag und Bekanntmachung des Hinweises auf die Patenterteilung: **06.05.2026**
(21) Anmeldenummer: 23207409.6
(22) Anmeldetag: 02.11.2023
(51) Int. Cl.: B60B 27/00, B60B 27/02, B60B 27/04, F16D 41/36

(54) **NABE INSBESONDERE FÜR FAHRRÄDER**
HUB, IN PARTICULAR FOR BICYCLES
MOYEU, EN PARTICULIER POUR BICYCLETTES

(30) Priorität: 08.11.2022 DE 102022129446
(43) Veröffentlichungstag der Anmeldung: 15.05.2024
(73) Patentinhaber: DT Swiss AG, 2504 Biel (CH)
(72) Erfinder: Spahr, Stefan, 2543 Lengnau (CH); Omlin, Nicolas, 3255 Rapperswil (CH)
(74) Vertreter: BSB Patentanwälte Schütte & Engelen Partnerschaft mbB

(56) Entgegenhaltungen:
- EP-B1- 2 599 643
- DE-A1- 102018 008 586
- US-A1- 2022 032 686

## Beschreibung

Die vorliegende Erfindung betrifft eine Nabe für im normalen und regelmäßigen bestimmungsgemäßen Betrieb wenigstens teilweise muskelbetriebene Fahrzeuge und insbesondere Fahrräder, wobei die Nabe ein Nabengehäuse, einen Rotor, eine Freilaufeinrichtung und eine Nabenachse umfasst. Das Nabengehäuse und der Rotor sind mit jeweils wenigstens zwei Wälzlagern drehbar gelagert. In dem Rotor und dem Nabengehäuse ist die Freilaufeinrichtung vorgesehen, um den Rotor in Antriebsrichtung drehfest mit dem Nabengehäuse zu verbinden. Wenn der Benutzer keine Antriebskraft aufbringt oder rückwärts tritt, ermöglicht die Freilaufeinrichtung einen Freilaufzustand, in welchem sich die Nabe weiter drehen kann, während der Rotor zum Beispiel stillsteht.

Außer bei Fahrrädern kann die Nabe auch bei anderen teilweise muskelbetriebenen Fahrzeugen und Zweirädern eingesetzt werden, die zum Beispiel über einen elektrischen Hilfsantrieb verfügen. Insbesondere wird die Nabe bei sportlichen Fahrrädern eingesetzt. In allen Ausgestaltungen wird die erfindungsgemäße Nabe bei solchen Fahrzeugen und insbesondere Fahrrädern eingesetzt, die im normalen und regelmäßigen bestimmungsgemäßen Betrieb wenigstens teilweise muskelbetrieben werden.

Im Stand der Technik sind diverse Naben bekannt geworden, die einen Freilauf aufweisen, damit sich zum Beispiel bei einer Bergabfahrt die Tretkurbel nicht ständig mitdreht. So sind im Stand der Technik Naben mit Sperrklinkenfreiläufen bekannt geworden, bei denen die Sperrklinken radial zwischen einer Freilaufstellung und einer Eingriffsstellung verschwenken können. Solche Naben verfügen über eine unterschiedliche Anzahl von Sperrklinken, wobei oft vier Sperrklinken symmetrisch auf dem Umfang verteilt angeordnet sind. Die Sperrklinken greifen bei Kraftübertragung in eine Verzahnung im Rotor ein. Durch die relativ geringe Zahl an Sperrklinken ist ein relativ großer Drehwinkel erforderlich, bis beim Antreten wieder ein Drehmoment übertragen wird.

Mit der EP 1 121 255 B1 ist eine Nabe mit einem Zahnscheibenfreilauf bekannt geworden, der zuverlässig und sehr schnell die Antriebskraft von dem Rotor auf das Nabengehäuse überträgt. Die Reibungsverluste sind relativ gering, wenn der Benutzer die Pedale nicht betätigt. Die Nabe stellt eine zuverlässige Funktion zur Verfügung und ermöglicht eine gleichmäßige Belastung der Zähne der Zahnscheiben. Dazu werden bei dieser Nabe zwei Zahnscheiben eingesetzt, die jeweils axial beweglich sind und die über jeweils eine Feder axial von außen aufeinander zu gedrückt werden. Dadurch werden beide Zahnscheiben schwimmend gelagert und können sich bei zum Beispiel Durchbiegungen der Nabe oder bei sonstigen Belastungen jeweils zueinander ausrichten, sodass für einen besonders zuverlässigen Betrieb gesorgt wird.

Mit der EP 3 275 692 A1 der Anmelderin ist eine Weiterentwicklung einer solchen leichten Nabe mit einem Zahnscheibenfreilauf und einer zuverlässigen Funktion bekannt geworden. Bei der Nabe umfasst der Zahnscheibenfreilauf eine rotorseitige Freilaufkomponente und eine nabenseitige Freilaufkomponente, wobei die nabenseitige Freilaufkomponente in das Nabengehäuse eingeschraubt ist und einen Lagersitz für ein darin aufgenommenes Wälzlager zur Lagerung des Nabengehäuses bildet. Dadurch kann die Steifigkeit der Nabe erhöht werden.

Zur noch weiteren Steigerung der Stabilität ist mit der DE 10 2020 103 129 A1 der Anmelderin eine Nabe mit einem derartigen Zahnscheibenfreilauf bekannt geworden, wobei das auf der Seite des Rotors angeordnete Nabenlager zur Lagerung des Nabengehäuses in einem Bereich mit vergrößertem Durchmesser der Nabenachse angeordnet ist. Dadurch kann die Stabilität erhöht werden, da die dickere Wandstärke der Nabenachse im Bereich des dem Rotor zugewandten Nabenlagers erheblich größer gewählt werden kann.

Mit der DE 10 2015 009 041 A1 ist eine Nabe bekannt geworden, bei der über Kupplungsringe eine Art von Zahnscheibenfreilauf bereitgestellt wird. Es geht darum, eine montagefreundliche Spielpassung zwischen der Nabenachse und dem Innenring eines Lagers bereitzustellen, um die Montage zu vereinfachen. Des Weiteren wird ein Schallreduzierungselement eingesetzt, um die charakteristischen Geräusche eines Zahnscheibenfreilaufs zu dämpfen. Über ein Befestigungselement im Inneren der Nabenachse wird die Nabenachse im Bereich eines Lagers gespreizt, um einen sicheren Sitz und eine einfache Montage zu gewährleisten. Aufgrund der vielen unterschiedlichen Bauteile ist der Aufbau kompliziert.

Die US 2022/032686 A1 offenbart eine Nabe mit den Merkmalen des Oberbegriffs von Anspruch 1.

Es ist deshalb die Aufgabe der vorliegenden Erfindung eine leichte Nabe zur Verfügung zu stellen, die einen einfachen Aufbau, eine hohe Stabilität und eine sehr zuverlässige Funktion ermöglicht.

Diese Aufgabe wird durch eine Nabe mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Nabe ist für wenigstens teilweise muskelbetriebene Fahrzeuge und insbesondere Fahrräder vorgesehen und umfasst eine insbesondere hohle Nabenachse, ein Nabengehäuse, einen Rotor und eine Freilaufeinrichtung. Das Nabengehäuse ist mit wenigstens zwei axial voneinander beabstandeten Nabenlagern drehbar gelagert, nämlich mit wenigstens einem näher an dem Rotor angeordneten rotorseitigen (axial inneren) Nabenlager und mit wenigstens einem weiter von dem Rotor entfernten (axial) äußeren Nabenlager. Die beiden Nabenlager sind (regelmäßig) in voneinander entfernten Endbereichen des Nabengehäuses angeordnet. Der Rotor ist mit wenigstens zwei axial voneinander beabstandeten Rotorlagern drehbar gelagert, nämlich mit einem näher an dem Nabengehäuse angeordneten nabenseitigen Rotorlager und mit wenigstens einem weiter von dem Nabengehäuse entfernten (axial) äußeren Rotorlager. Die Rotorlager sind (regelmäßig) vorzugsweise in voneinander entfernten Endbereichen des Rotors angeordnet. Es ist eine Freilaufeinrichtung umfasst, die eine mit dem Nabengehäuse gekoppelte nabenseitige Zahnscheibeneinrichtung und eine damit zusammenwirkende und mit dem Rotor gekoppelte rotorseitige Zahnscheibeneinrichtung umfasst. Die beiden Zahnscheibeneinrichtungen weisen jeweils eine Stirnverzahnung zum Eingriff ineinander auf und werden über wenigstens eine Vorspanneinrichtung in eine Eingriffsstellung vorbelastet. Die Stirnverzahnung der mit dem Nabengehäuse gekoppelten nabenseitigen Zahnscheibeneinrichtung ist axial zu dem Rotor ausgerichtet. Die rotorseitige Zahnscheibeneinrichtung ist radial innerhalb des Rotors aufgenommen und ist über eine äußere Radialverzahnung (an der rotorseitigen Zahnscheibeneinrichtung) mit einer radialen Innenverzahnung in dem Rotor in Antriebsrichtung drehfest mit dem Rotor gekoppelt. Die Stirnverzahnung der rotorseitigen Zahnscheibeneinrichtung ist axial zu dem Nabengehäuse hin ausgerichtet. Ein lichter Innendurchmesser der rotorseitigen Zahnscheibeneinrichtung ist größer als ein Außendurchmesser des nabenseitigen Rotorlagers.

Die erfindungsgemäße Nabe hat viele Vorteile. Ein erheblicher Vorteil der erfindungsgemäßen Nabe besteht in dem einfachen Aufbau und der hohen Zuverlässigkeit. Der lichte Innendurchmesser der rotorseitigen Zahnscheibeneinrichtung ist größer als ein Außendurchmesser des nabenseitigen Rotorlagers, sodass das nabenseitige Rotorlager näher an dem Nabengehäuse gelagert werden kann. Dadurch, dass die rotorseitige Zahnscheibeneinrichtung radial außen mit einer äußeren Radialverzahnung in einer radialen Innenverzahnung in dem Rotor aufgenommen und geführt wird, kann eine sehr zuverlässige Funktionsweise gewährleistet werden. Die rotorseitige Zahnscheibeneinrichtung wird über den großen Außendurchmesser sehr exakt geführt und kann sich perfekt zu der nabenseitigen Zahnscheibeneinrichtung ausrichten. Eine Fehlfunktion durch ein Verkanten oder dergleichen kann praktisch ausgeschlossen werden.

Sehr vorteilhaft ist auch, dass die rotorseitige Zahnscheibeneinrichtung in Antriebsrichtung drehfest mit dem Rotor gekoppelt ist und dass die nabenseitige Zahnscheibeneinrichtung in Antriebsrichtung drehfest mit dem Nabengehäuse gekoppelt ist. Dadurch werden ein einfacher Aufbau und eine leichte Montage gewährleistet, die Fehler bei der Montage weitestgehend vermeidet. Die nabenseitige Zahnscheibeneinrichtung wird an dem Nabengehäuse aufgenommen und weist eine Stirnverzahnung auf, die zu dem Rotor hin ausgerichtet ist. Die rotorseitige Zahnscheibeneinrichtung wird am Rotor aufgenommen und weist eine Stirnverzahnung auf, die zum Nabengehäuse hin zeigt.

In einer bevorzugten Weiterbildung ist von der rotorseitigen Zahnscheibeneinrichtung wenigstens die Stirnverzahnung radial (nicht nur im Rotor, sondern auch radial) innerhalb des Nabengehäuses aufgenommen (wenn sich die Nabe im bestimmungsgemäß montierten Zustand befindet). Insbesondere ist die rotorseitige Zahnscheibeneinrichtung wenigstens zu einem Drittel oder der Hälfte oder dreiviertel der axialen Länge oder sogar vollständig radial innerhalb des Nabengehäuses aufgenommen. Da die rotorseitige Zahnscheibeneinrichtung radial außen wenigstens teilweise in der radialen Innenverzahnung des Rotors aufgenommen ist, bedeutet dieses, dass das rotorseitige Ende des Nabengehäuses das nabenseitige Ende des Rotors über wenigstens einen Abschnitt überragt. Dadurch kommt es dazu, dass die rotorseitige Zahnscheibeneinrichtung radial sowohl von dem Rotor als auch von dem Nabengehäuse umgeben ist.

Insbesondere befinden sich die rotorseitige Zahnscheibeneinrichtung, das nabenseitige Rotorlager und ein rotorseitiger Nabenflansch an dem Nabengehäuse in einer gemeinsamen Querschnittsebene quer zu einer Symmetrieachse der Nabe oder quer zu einer Längserstreckung der Nabenachse. Dadurch wird eine kompakte Bauweise bei zuverlässiger Funktion ermöglicht. Der Aufbau ist einfach und ermöglicht eine optimale Ableitung der auftretenden Kräfte. Die Nabenachse erstreckt sich insbesondere durch das Nabengehäuse, die beiden Zahnscheibeneinrichtungen und durch den Rotor und nimmt an ihren Enden vorzugsweise jeweils einen Endanschlag auf.

In vorteilhaften Weiterbildungen ist die nabenseitige Zahnscheibeneinrichtung radial innerhalb des Nabengehäuses aufgenommen und ist über eine äußere Radialverzahnung an der nabenseitigen Zahnscheibeneinrichtung mit einer radialen Innenverzahnung in dem Nabengehäuse in Antriebsrichtung drehfest mit dem Nabengehäuse gekoppelt.

Besonders bevorzugt sind die nabenseitige Zahnscheibeneinrichtung und die rotorseitige Zahnscheibeneinrichtung beide jeweils gegen eine Vorspannkraft wenigstens einer Vorspanneinrichtung von einer Eingriffsstellung in eine Freilaufstellung überführbar. Besonders bevorzugt ist es dabei, dass sowohl der nabenseitigen Zahnscheibeneinrichtung als auch der rotorseitigen Zahnscheibeneinrichtung jeweils eine Vorspanneinrichtung zugeordnet ist. Beispielsweise können die Vorspanneinrichtungen insgesamt eine oder mehrere mechanische oder magnetische Federn umfassen. Werden beide Zahnscheibeneinrichtungen jeweils von außen aufeinander zu gedrückt oder durch einen entsprechenden Mechanismus aufeinander zugezogen, so erlaubt dies eine besonders zuverlässige Freilauffunktion und die Konstruktion einer hochwertigen Nabe.

Werden beide Zahnscheibeneinrichtungen jeweils separat in eine Eingriffsstellung vorgespannt, so kann ein Verklemmen oder Verkanten oder eine sonstige Störung an einer der Zahnscheibeneinrichtungen durch die andere Zahnscheibeneinrichtung kompensiert werden. Dazu sind die beiden Zahnscheibeneinrichtungen insbesondere schwimmend aufgenommen. Dadurch kann eine dreidimensionale Verkippung einer Zahnscheibeneinrichtung durch eine entsprechende dreidimensionale Verkippung der anderen Zahnscheibeneinrichtung ausgeglichen werden. Weiterhin kann bei Einsatz zweier separater Vorspanneinrichtungen auch eine Fehlfunktion einer Vorspanneinrichtung kompensiert werden. Diese Maßnahmen erhöhen die Zuverlässigkeit erheblich. In Kombination mit dem besonders großen Außendurchmesser der Radialverzahnungen wird so eine besonders zuverlässige Nabe zur Verfügung gestellt. Die hohe Führungsqualität durch die großen Außendurchmesser an den Radialverzahnungen führte dazu, dass nur geringe dreidimensionale Verkippungen auftreten. Gegebenenfalls werden solche Verkippungen durch die zwei Vorspanneinrichtungen zuverlässig ausgeglichen.

Besonders bevorzugt ist ein lichter Innendurchmesser der nabenseitigen Zahnscheibeneinrichtung größer als ein Außendurchmesser des rotorseitigen Nabenlagers. Dadurch wird es ermöglicht, dass das rotorseitige Nabenlager axial weiter zu dem Rotor hin platziert werden kann. Dadurch können das rotorseitige Nabenlager und das nabenseitige Rotorlager praktisch unmittelbar nebeneinander angeordnet werden. Die Zahnscheibeneinrichtungen umgeben dann die jeweiligen Lager radial außen.

Vorzugsweise werden für wenigstens ein Nabenlager und für wenigstens ein Rotorlager Wälzlager verwendet, die jeweils über eine Mehrzahl an Wälzkörpern verfügen. Bevorzugterweise werden Rillenkugellager eingesetzt, die über einen Innenring und einen Außenring verfügen. Zwischen dem rotorseitigen Nabenlager und dem nabenseitigen Rotorlager ist vorzugsweise ein Abstandhalter vorgesehen. Als Abstandhalter kann beispielsweise eine dünne Scheibe oder eine kurze Hülse vorgesehen sein, um ein unabhängiges Drehen des jeweiligen Außenrings der relativ nah benachbarten Wälzlager zu ermöglichen.

In allen Ausgestaltungen ist es besonders bevorzugt, dass das Nabengehäuse mit den Nabenlagern insbesondere unmittelbar auf der Nabenachse drehbar gelagert ist. Ebenso ist es bevorzugt, dass der Rotor mit den Rotorlagern vorzugsweise unmittelbar auf der Nabenachse drehbar gelagert ist. Denkbar ist es aber auch, dass ein Nabenlager oder ein Rotorlager auf einer Art Hülse oder dergleichen angeordnet ist, die wiederum an der Nabenachse aufgenommen oder angeordnet wird.

In allen Ausgestaltungen ist es besonders bevorzugt, dass eine zentrale Querschnittsebene (quer und insbesondere senkrecht zu einer Symmetrieachse der Nabe) durch die rotorseitige Zahnscheibeneinrichtung die Wälzkörper des nabenseitigen Rotorlagers schneidet. Es ist bevorzugt, dass eine zentrale Querschnittsebene (quer und insbesondere senkrecht zu einer Symmetrieachse der Nabe) durch die nabenseitige Zahnscheibeneinrichtung die Wälzkörper des rotorseitigen Nabenlagers schneidet. Unter einer "zentralen Querschnittsebene" wird insbesondere eine mittlere Querschnittsebene verstanden, die sich in der axialen Mitte der jeweiligen Zahnscheibeneinrichtung befindet. Eine solche zentrale Querschnittsebene kann zum Beispiel in axialer Richtung mittig durch die Radialverzahnung der Zahnscheibeneinrichtung im Ruhezustand der Nabe verlaufen. Im Ruhezustand befinden sich die Freilaufeinrichtungen im Eingriffszustand und regelmäßig befinden sich die beiden Zahnscheibeneinrichtungen in einem mittleren axialen Bereich und können in beide axialen Richtungen gegen die Vorspannkraft der Vorspanneinrichtung ausgelenkt werden.

In bevorzugten Ausgestaltungen ist ein axialer Abstand der zentralen Querschnittsebene durch die rotorseitige Zahnscheibeneinrichtung von der Querschnittsebene durch die Wälzkörper (Wälzkörperebene) des nabenseitigen Rotorlagers kleiner als der Durchmesser eines Wälzkörpers und insbesondere kleiner als der Radius eines Wälzkörpers und/oder kleiner als eine minimale Wandstärke der Nabenachse. Dadurch wird eine besonders effektive Kraftableitung ermöglicht.

Es ist bevorzugt, dass ein axialer Abstand der zentralen Querschnittsebene durch die nabenseitige Zahnscheibeneinrichtung von der Querschnittsebene durch die Wälzkörper des rotorseitigen Nabenlagers kleiner ist als der Durchmesser eines Wälzkörpers und insbesondere kleiner als der Radius eines Wälzkörpers und/oder kleiner als eine minimale Wandstärke der Nabenachse.

In bevorzugten Ausgestaltungen ist ein Außendurchmesser der rotorseitigen Zahnscheibeneinrichtung größer als ein Außendurchmesser der Ritzelaufnahme. Das erlaubt eine besonders zuverlässige Funktion und zeigt eine besonders große Zahnscheibeneinrichtung, da die standardisierte Ritzelaufnahme einen kleineren Außendurchmesser aufweist als der Außendurchmesser der rotorseitigen Zahnscheibeneinrichtung. Besonders bevorzugt ist ein Außendurchmesser der Stirnverzahnung der rotorseitigen Zahnscheibeneinrichtung größer als ein Außendurchmesser der Ritzelaufnahme. Dadurch wird deutlich, dass sich die Stirnverzahnung auf einem sehr großen Durchmesser befindet und eine große Kontaktfläche bietet.

Besonders bevorzugt wird eine Vielzahl von Zähnen vorgesehen, wobei an der Zahnscheibe 48, 60, 72, 80, 90, 100, 110 oder 120 oder noch mehr Zähne ausgebildet sein können. Beispielsweise können beide Zahnscheibeneinrichtungen jeweils eine gleiche Anzahl von zum Beispiel 90 oder 120 (+/-10) Zähnen aufweisen. Denkbar ist es auch, dass die Zähnezahlen an den beiden Zahnscheibeneinrichtungen unterschiedlich sind, sofern jedenfalls die Teilung und Anordnung der einzelnen Axialzähne an der Stirnverzahnung gleich ist.

In allen Ausgestaltungen ist es möglich und bevorzugt, dass die Stirnverzahnung an einer Stirnseite einer Zahnscheibeneinrichtung ausgebildet ist. Insbesondere ist die Stirnseite quer und insbesondere senkrecht zur Rotationsachse ausgebildet. Möglich ist es aber auch, dass die Stirnverzahnung als Kegelverzahnung ausgeführt ist und somit eine Neigung zu einer Ebene senkrecht auf der Symmetrieachse aufweist. Wesentlich ist, dass die beiden Zahnscheibeneinrichtungen entsprechend passend und aufeinander abgestimmt ausgebildet sind, um einen zulässigen Eingriff der jeweiligen Zahnsegmente ineinander zu ermöglichen.

Vorzugsweise weist die nabenseitige Zahnscheibeneinrichtung eine äußere Radialverzahnung auf, welche mit einer radialen Innenverzahnung in dem Nabengehäuse im Eingriff steht und axial demgegenüber bewegbar ist. Das bedeutet, dass die nabenseitige Zahnscheibeneinrichtung axial gegenüber der Innenverzahnung in dem Nabengehäuse bewegbar ist. Die radiale Innenverzahnung in dem Nabengehäuse muss nicht unmittelbar in dem Nabengehäuse ausgebildet sein, sondern kann zum Beispiel auch an einem Gewindering ausgebildet sein, der in dem Nabengehäuse aufgenommen ist und insbesondere in das Nabengehäuse eingeschraubt wird.

Durch einen separaten Gewindering wird es ermöglicht, dass bei Abnutzung oder dergleichen nur der Gewindering ausgetauscht werden muss, während das Nabengehäuse weiterverwendet werden kann.

Es ist möglich, dass der Gewindering aus einem belastbareren Material als das Nabengehäuse hergestellt wird. Beispielsweise kann der Gewindering aus Stahl gefertigt sein. Möglich ist es aber auch, dass der Gewindering aus einem leichteren Material wie zum Beispiel Aluminium oder Titan oder einer entsprechenden Legierung gefertigt wird. Sollte ein Verschleiß an der Radialverzahnung in dem Gewindering auftreten, kann dieser bei Bedarf entfernt und ausgetauscht werden.

In bevorzugten Weiterbildungen weist der Gewindering an der axialen Außenseite eine zentrale Vertiefung und insbesondere zentrische Vertiefung auf. Die zentrale Vertiefung kann eine konische Vertiefung bilden. In die zentrale Vertiefung taucht (im bestimmungsgemäß eingebauten Zustand) vorzugsweise ein an der Stirnseite des Rotors ausgebildeter Konusabschnitt berührungsfrei ein. Das ermöglicht einen kompakten Aufbau. Außerdem kann zwischen dem Konusabschnitt und der konischen Vertiefung ein (dünner) Dichtspalt ausgebildet werden.

Besonders bevorzugt ist der Gewindering an der radialen Außenseite in axialer Richtung (erheblich) breiter ausgebildet als an der radialen Innenseite. Das kann durch die zentrale Vertiefung bewirkt werden, sodass eine axiale Breite radial außen mindestens 5% oder 10% oder vorzugsweise mehr als 15% oder sogar 20% größer ist als radial innen. Insbesondere ist eine axiale Breite radial außen zwischen 10% und 25% größer als radial innen.

In vorteilhaften Weiterbildungen weist der Gewindering auf der dem Rotor abgewandten axialen Innenseite einen (konischen) Stützabschnitt auf, welcher an einer entsprechend (konisch) ausgebildeten Aufnahme in dem Nabengehäuse anliegt. Werden der Stützabschnitt und die Aufnahme in dem Nabengehäuse entsprechend konisch ausgebildet, kann axialer Bauraum eingespart werden. Ein rechtwinklig zur zentralen Symmetrieachse ausgebildeter Stützabschnitt und eine entsprechend rechtwinklig verlaufende Aufnahme ermöglichen eine einfachere Fertigung.

Insbesondere erstreckt sich das Außengewinde des Gewinderings axial nach außen über die nabenseitige Zahnscheibeneinrichtung hinaus und erstreckt sich bis radial über die rotorseitige Zahnscheibeneinrichtung hin und überdeckt diese wenigstens zum Teil. Durch eine solche Ausgestaltung kann die Eingriffsfläche des Gewinderings vergrößert werden, ohne in axialer Richtung mehr Bauraum zu benötigen.

Vorzugsweise umfasst das Außengewinde des Gewinderings wenigstens zwei separat ausgebildete und durchgängige Gewindegänge. Vorzugsweise umfasst das Innengewinde in dem Nabengehäuse wenigstens zwei separat ausgebildete und durchgängige Gewindegänge. Dadurch kann ein Gewinde ausgebildet werden, welches eine hohe Traglast ermöglicht und gleichzeitig nur eine geringe Axialkraft beim Treten erzeugt.

Grundsätzlich wird beim Fahren durch die Antriebskraft des Fahrers der Gewindering weiter in das Nabengehäuse hineingetrieben, da die Antriebskraft über die äußere Radialverzahnung der Zahnscheibeneinrichtung und die radiale Innenverzahnung an dem Gewindering auf diesen übertragen wird. Dadurch wird ein Einschraubmoment erzeugt, welches zu einer Aufspreizung des Nabengehäuses führen kann. Durch ein mehrgängiges Gewinde kann bei gleicher Festigkeit die Belastung im Nabengehäuse gesenkt und damit eine Aufspreizung des Nabengehäuses verhindert werden.

In allen Ausgestaltungen ist es bevorzugt, dass wenigstens eine Zahnscheibeneinrichtung einen Eingriffskörper aufweist, an dem die Stirnverzahnung über eine radiale Höhe und die Radialverzahnung über eine axiale Länge ausgebildet sind. Dabei ist die axiale Länge der Radialverzahnung insbesondere größer als die radiale Höhe der Stirnverzahnung. Die axiale Länge kann insbesondere wenigstens das 1,5-fache der radialen Höhe betragen. Dadurch wird eine sehr zuverlässige und präzise axiale Führung der Zahnscheibeneinrichtung gewährleistet.

Insbesondere ist eine axiale Erstreckung des Eingriffskörpers größer als ein Durchmesser eines Wälzkörpers eines Rotorlagers und/oder Nabenlagers. Vorzugsweise ist eine axiale Erstreckung des Eingriffskörpers größer als die Hälfte oder 2/3 einer axialen Breite eines Wälzlagers und insbesondere größer als die Hälfte oder 2/3 einer axialen Breite des nabenseitigen Rotorlagers. Insbesondere beträgt eine axiale Breite des Eingriffskörpers wenigstens 5 mm und vorzugsweise wenigstens 6 mm. Die axiale Breite kann insbesondere zwischen 4,5 mm und 8 mm betragen. In einer konkreten Ausgestaltung beträgt die axiale Breite der Radialverzahnung einer Zahnscheibeneinrichtung 6,16 mm, während der lichte Innendurchmesser zwischen 25 mm und 35 mm und in einer konkreten Ausgestaltung etwa 30 mm beträgt. Der Außendurchmesser (inklusive der Radialverzahnung) der Zahnscheibeneinrichtung beträgt vorzugsweise zwischen 30 mm und 40 mm und kann in einem konkreten Fall 37,8 mm betragen.

Der Gewindering weist insbesondere eine axiale Länge zwischen 5 mm und 10 mm auf. Vorzugsweise beträgt eine axiale Länge des Gewinderings 7 mm (+/-1 mm). Der Außendurchmesser des Gewinderings kann zwischen 35 und 45 mm und in einem konkreten Beispiel etwa 44 mm betragen. Der lichte Innendurchmesser der radialen Innenverzahnung liegt in einem konkreten Beispiel bei 30 mm.

Die zentrale Vertiefung oder konische Vertiefung der axialen Außenseite des Gewinderings weist vorzugsweise einen Winkel zwischen 15° und 45° auf und kann in einer bevorzugten Ausgestaltung etwa 30° betragen. Dabei ergibt sich dann eine Tiefe der konischen Vertiefung von zum Beispiel 0,9 oder 1 mm. Vorzugsweise weist der Konusabschnitt an der Stirnseite des Rotors einen entsprechend angepassten Winkel auf. Der Winkel kann identisch sein, kann aber auch davon abweichen.

In bevorzugten Ausgestaltungen ist eine axiale Länge der Radialverzahnung größer als die radiale Höhe der Stirnverzahnung und insbesondere um den wenigstens den Faktor 1,5 größer.

Vorzugsweise ist ein Abstand der beiden zentralen Querschnittsebenen durch die rotorseitige Zahnscheibeneinrichtung und die nabenseitige Zahnscheibeneinrichtung kleiner als die axiale Breite beider Zahnscheibeneinrichtungen im Eingriffszustand. Insbesondere ist ein Abstand der beiden zentralen Querschnittsebenen durch die rotorseitige Zahnscheibeneinrichtung und die nabenseitige Zahnscheibeneinrichtung kleiner als die doppelte axiale Länge der Radialverzahnung eines Eingriffskörpers wenigstens einer Zahnscheibeneinrichtung. Es ist möglich und bevorzugt, dass ein Abstand der beiden Querschnittsebenen kleiner ist als eine 1,2-fache oder eine 1-fache axiale Breite des Gewinderings.

Besonders bevorzugt sind die nabenseitige Zahnscheibeneinrichtung und die rotorseitige Zahnscheibeneinrichtung im Wesentlichen gleich ausgebildet. Das bedeutet, dass vorzugsweise identische Eingriffskörper für die beiden Zahnscheibeneinrichtungen verwendet werden. Insbesondere werden auch im Wesentlichen gleiche oder sogar identische Vorspanneinrichtungen verwendet. Bevorzugt werden Vorspannfedern eingesetzt. Zum Beispiel Spiralfedern oder auch konisch gewickelte Federn.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3: einen perspektivische Darstellung einer anmeldungsgemäßen Nabe;
- Figur 4: eine Vorderansicht der Nabe nach Figur 3;
- Figur 5: einen Schnitt A-A durch die Nabe nach Figur 4;
- Figur 6: ein vergrößertes Detail "X" aus Figur 5;
- Figur 7: eine schematische geschnittene Ansicht des Rotors der Nabe nach Figur 5;
- Figur 8: ein vergrößertes Detail einer Variante einer anmeldungsgemäßen Nabe;
- Figur 9: eine schematische geschnittene Ansicht eines zweiteiligen Rotors für eine anmeldungsgemäße Nabe;
- Figur 10: ein schematisches Detail des zweiteiligen Rotors nach Fig. 9;
- Figur 11a,b: schematische Ansichten einer Freilaufeinrichtung und der Zahnscheibeneinrichtung für eine anmeldungsgemäße Nabe; und
- Figur 12a-c: eine schematische perspektivische Ansicht und schematische Querschnitte eines Gewinderings für eine anmeldungsgemäße Nabe.

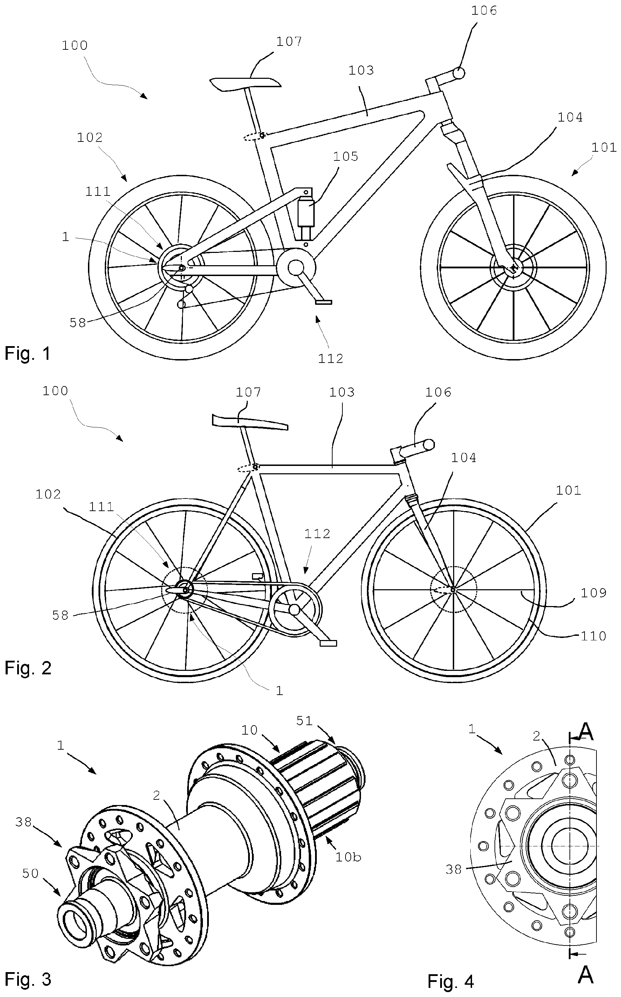

In den Figuren 1 und 2 sind jeweils ein Mountainbike bzw. ein Rennrad 100 dargestellt, die jeweils mit einer erfindungsgemäßen Nabe 1 ausgerüstet sind. Das Mountainbike bzw. Rennrad 100 verfügt jeweils über ein Vorderrad 101 und ein Hinterrad 102. An dem Hinterrad 102 wird die erfindungsgemäße Nabe 1 eingesetzt. Die beiden Räder 101, 102 verfügen über Speichen 109 und eine Felge 110 und eine Ritzeleinrichtung 111. Grundsätzlich können konventionelle Felgenbremsen oder auch andere Bremsen wie zum Beispiel Scheibenbremsen vorgesehen sein.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe 1 der Räder kann jeweils über ein Spanneinrichtung 58 (z. B. Steckachse oder Schnellspanner) an dem Rahmen befestigt sein.

Die in den Fahrrädern gemäß Figur 1 und 2 jeweils am Hinterrad 102 eingesetzten Naben 1 zeigt Figur 3 in einer Perspektive und Figur 4 in einer Vorderansicht.

Die Nabe 1 verfügt über ein Nabengehäuse 2 und einen Rotor 10 sowie eine Bremsscheibenaufnahme 38. Auf der Außenseite des Rotors 10 ist eine Ritzelaufnahme 10b zur Aufnahme eines Ritzelpaketes mit einer entsprechenden Anzahl von Ritzeln vorgesehen. An den beiden Enden der Nabe 1 sind Endanschläge 50, 51 vorgesehen, die hier aufgesteckt sind, aber gegebenenfalls auch eingesteckt oder angeschraubt sein können. Wie hier zu erkennen, sind die Endanschläge 50, 51 hohl ausgebildet und dienen zur Aufnahme einer Spannachse 59, mit der die Nabe 1 an dem Rahmen befestigt werden kann.

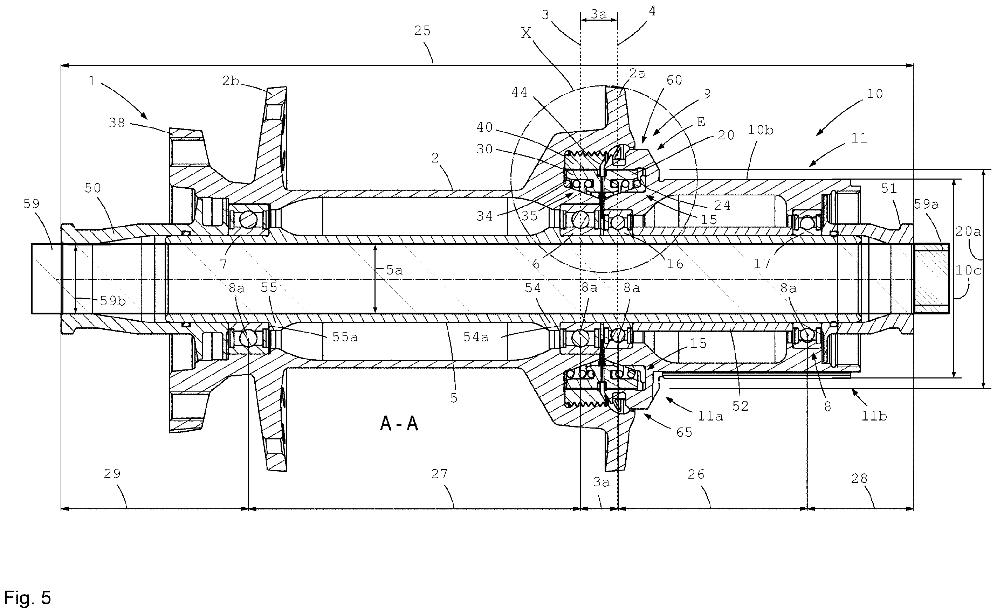

Figur 5 zeigt den A-A aus Figur 4. Die Nabe 1 weist hier eine Einbaulänge 25 von 148 mm auf. Die Nabe 1 umfasst die hohl ausgebildete Nabenachse 5, auf der das Nabengehäuse 2 über die Nabenlager 6 und 7 drehbar gelagert ist. Der Rotor 10 ist ebenfalls über Wälzlager 16 und 17 hier unmittelbar auf der Nabenachse 5 drehbar gelagert.

Auf der Nabenachse 5 ist näher an dem Rotor 10 eine Verdickung 54 mit einem radialen Absatz 54a und an dem äußeren Ende unterhalb des Nabenflansches 2b eine Verdickung 55 mit einem radialen Absatz 55a ausgebildet. Das rotorseitige Nabenlager 6 liegt an dem radialen Absatz 54a und das am anderen Ende des Nabengehäuses 2 angeordnete äußere Nabenlager 7 liegt an dem Absatz 55a der Nabenachse 5 an. Axial nach außen schließt sich an das äußere Nabenlager 7 der Endanschlag 50 an, der hier auf die Nabenachse 5 aufgeschoben ist und über einen nach außen ragenden Doppelflansch das Nabengehäuse nach außen abgedichtet.

Zum Rotor 10 hin schließt sich an das rotorseitige Nabenlager 6 ein (dünner und hier scheibenförmiger) Abstandhalter 53 und daran das nabenseitige Rotorlager 16 an. Zwischen dem nabenseitigen Rotorlager 16 und dem äußeren Rotorlager 17 ist als Abstandhalter eine Hülse 52 auf die Nabenachse 5 geschoben. Axial nach außen schließt sich an das äußere Rotorlager 17 der Endanschlag 51 an. Die Nabe 1 wird fest in den Rahmen eingespannt.

Die hohle Nabenachse 5 weist einen inneren lichten Durchmesser 5a auf, der je nach Ausgestaltung 12 mm, 15 mm oder auch 16 mm oder 17 mm oder mehr betragen kann. Durch die hohle Nabenachse 5 kann eine Spannachse 59 einer Spanneinrichtung 58 durchgeschoben werden, um die Nabe 1 an einem Rahmen eines Fahrrads zu befestigen. An einem Ende kann die Spannachse 59 beispielsweise ein Endstück 59a mit einem Außengewinde aufweisen, mit dem die Spannachse 59 in ein entsprechendes Gewinde an dem Rahmen eingeschraubt werden kann. An dem anderen Ende kann ein entsprechender Spannmechanismus vorgesehen sein, um die Nabe 1 zuverlässig an einem Rahmen aufzunehmen und zu spannen.

Der Außendurchmesser 59b der Spannachse 59 und der Innendurchmesser 5a der hohlen Nabenachse 5 sind so aufeinander abgestimmt, dass einerseits ein (relativ) ungestörtes Durchführen der Spannachse durch die hohle Nabenachse 5 ermöglicht wird, während andererseits die hohle Nabenachse 5 auch von der Spannachse 59 im Betrieb abgestützt werden kann, wenn sich aufgrund der Belastungen lokale Durchbiegungen ergeben. Dadurch wird die Stabilität der Nabe 1 insgesamt erhöht.

Möglich ist es aber auch, dass auf diese zusätzliche Abstützung verzichtet wird. Dann wird eine Spannachse 59 eingesetzt, die über weite Teile der Nabenachse 5 einen deutlichen radialen Abstand zwischen Nabenachse 5 und Spannachse 59 aufweist, um das Einführen oder Herausnehmen der Spannachse gar nicht oder äußerst wenig zu beeinträchtigen.

Anmeldungsgemäß sind die Nabenlager 6 und 7 und auch die Rotorlager 16 und 17 jeweils als Wälzlager 8 ausgeführt und weisen jeweils eine Mehrzahl von Wälzkörpern 8 auf. Hier im Ausführungsbeispiel sind die Wälzlager alle als Rillenkugellager ausgeführt.

Die Nabe 1 wird in axialer Richtung fest in dem Rahmen eingespannt. Der Kraftfluss verläuft dabei beispielsweise von dem linken Ende in Figur 5 durch den Endanschlag 50, den inneren Lagerring des äußeren Nabenlagers 7 und über den Absatz 55a der Verdickung 55 in die hohle Nabenachse 5 hinein. Von dort wird die eingeleitete Kraft über den Absatz 54a der Verdickung 54 in den inneren Lagerring des Nabenlagers 6 und durch den Abstandhalter 53 zwischen dem rotorseitigen Nabenlager und dem nabenseitigen Rotorlager 16 geleitet. Von dort tritt die Kraft in den inneren Lagerring des nabenseitigen Rotorlagers 16 ein und wird über die Hülse 52 zu dem Lagerinnenring des äußeren Rotorlagers 17 und von dort durch den Endanschlag 51 wieder in den Rahmen eingeleitet. Das Nabengehäuse 2 und der Rotor 10 werden radial und axial durch die Rillenkugellager gehalten.

Das Nabengehäuse 2 weist auf der Rotorseite einen Nabenflansch 2a und auf der anderen Seite ein Nabenflansch 2b auf. An den Nabenflanschen 2a, 2b können die Speichen befestigt werden. Gegenüber von dem Rotor 10 ist an dem anderen und äußeren Nabenende die Bremsscheibenaufnahme 38 vorgesehen.

Radial innerhalb des rotorseitigen Nabenflansches 2a ist in dem Nabengehäuse ein Gewindering 40 eingeschraubt, der eine radiale Innenverzahnung 43 aufweist, in die die nabenseitige Zahnscheibeneinrichtung 30 eingesetzt ist. An dem nabenseitigen Ende des Rotors 10 ist radial innerhalb des Endabschnitts 60 die rotorseitige Zahnscheibeneinrichtung 20 der Freilaufeinrichtung 9 eingesetzt. Der Endabschnitt 60 erstreckt sich von einem nabenseitigen Ende 60a an der nabenseitige Stirnseite 10a axial nach außen bis zu einem anderen bzw. äußeren Ende 60b.

Sowohl die rotorseitige Zahnscheibeneinrichtung 20 als auch die nabenseitige Zahnscheibeneinrichtung 30 verfügen jeweils über eine äußere Radialverzahnung 23, 33, die mit entsprechenden radialen Innenverzahnungen 43 in dem Gewindering 40 und im Inneren des Endabschnitts 60 kämmen. Darüber sind die rotorseitige Zahnscheibeneinrichtung 20 und die nabenseitige Zahnscheibeneinrichtung 30 drehfest mit dem Rotor 10 bzw. dem Nabengehäuse 2 gekoppelt.

Gleichzeitig können beide Zahnscheibeneinrichtungen 20, 30 jeweils in axialer Richtung zwischen einer Eingriffsstellung E und einer Freilaufstellung F bewegt werden. Durch die Stirnverzahnung bzw. Schrägverzahnung bedingt, gleiten die schrägen Zahnflächen der Stirnverzahnung beim Rückwärtstreten aneinander ab und drücken die Zahnscheibeneinrichtungen 20, 30 in axialer Richtung auseinander. Wird Antriebskraft aufgebracht, treten die Stirnverzahnungen wieder miteinander in Eingriff.

Die Zahnscheibeneinrichtung 20 wird durch die Vorspanneinrichtung 24, hier in Form einer zylindrischen Spiralfeder, in die dargestellte Eingriffsposition E vorbelastet. Entsprechend wird die Zahnscheibeneinrichtung 30 durch einer ebenfalls hier als zylindrische Spiralfeder ausgebildete Vorbelastungseinrichtung oder Vorspanneinrichtung 34 axial in die Eingriffsstellung E vorbelastet. Das bedeutet hier, dass die nabenseitige Zahnscheibeneinrichtung 30 in Richtung auf den Rotor vorbelastet wird, während die rotorseitige Zahnscheibeneinrichtung 20 durch die Vorbelastungseinrichtung oder Vorspanneinrichtung 24 in Richtung auf das Nabengehäuse 2 vorgespannt wird. Die Wirkung der Vorspanneinrichtung kann über mechanische Federn oder auch magnetische Federn oder auch pneumatisch bewirkt werden.

Der Rotor 10 verfügt über einen Rotorkörper 11, der sich von dem nabenseitigen Ende 11a zu dem gegenüberliegenden und äußeren Ende 11b erstreckt. Auf der Außenoberfläche des Rotorkörpers 11 ist die Ritzelaufnahme 10b vorgesehen. Dort kann ein Ritzel oder mehrere Ritzel oder es kann ein Ritzelpaket befestigt werden.

An dem nabenseitigen Ende 11a ist der Endabschnitt 60 mit einem vergrößerten Durchmesser ausgebildet. Innerhalb des Endabschnitts 60 ist die rotorseitige Zahnscheibeneinrichtung 20 aufgenommen, die einen Außendurchmesser 20a aufweist, der größer ist als ein Außendurchmesser 10c der Ritzelaufnahme 10b des Rotorkörpers 11. Der Außendurchmesser 30a entspricht dem Außendurchmesser 20a. Auch die axialen Breite 20b und 30b sind gleich.

Wie in Figur 5 klar erkennbar, schneiden die Wälzkörperebenen bzw. Querschnittsebenen 3, 4 (durch die Wälzkörper 8a des rotorseitigen Nabenlagers 6 und des nabenseitigen Rotorlagers 16) auch jeweils die Zahnscheibeneinrichtungen 20, 30. Es ist erkennbar, dass die Wälzkörperebene bzw. Querschnittsebene 4 durch das nabenseitige Rotorlager 16, die Vorspanneinrichtung 24 und die Radialverzahnung der rotorseitigen Zahnscheibeneinrichtung 20 und durch den Nabenflansch 2a des Nabengehäuses verläuft. Weiterhin wird eine radial außen auf dem Endabschnitt 60 angeordnete Dichtungseinheit 68 durch die Querschnittsebene bzw. Wälzkörperebene 4 geschnitten.

Eine solche Anordnung, bei der die Querschnittsebenen bzw. Wälzkörperebenen 3 und 4 die Eingriffsbereiche der Radialverzahnungen der beiden Zahnscheibeneinrichtungen und die jeweils zugeordneten Wälzlager 6, 16 schneiden, bietet eine optimale Ableitung der auftretenden Belastungen im Betrieb. Der Abstand 26 der beiden Rotorlager 16, 17 kann hier sehr groß gewählt werden, da die rotorseitige Zahnscheibeneinrichtung 20 radial außerhalb des nabenseitigen Rotorlagers 16 angeordnet ist und dieses radial umgibt. Ein Abstand 27 der beiden Nabenlager 6, 7 kann ebenfalls sehr groß gewählt werden, da auch die nabenseitige Zahnscheibeneinrichtung 30 radial außerhalb des rotorseitigen Nabenlagers 6 angeordnet ist und dieses radial umgibt.

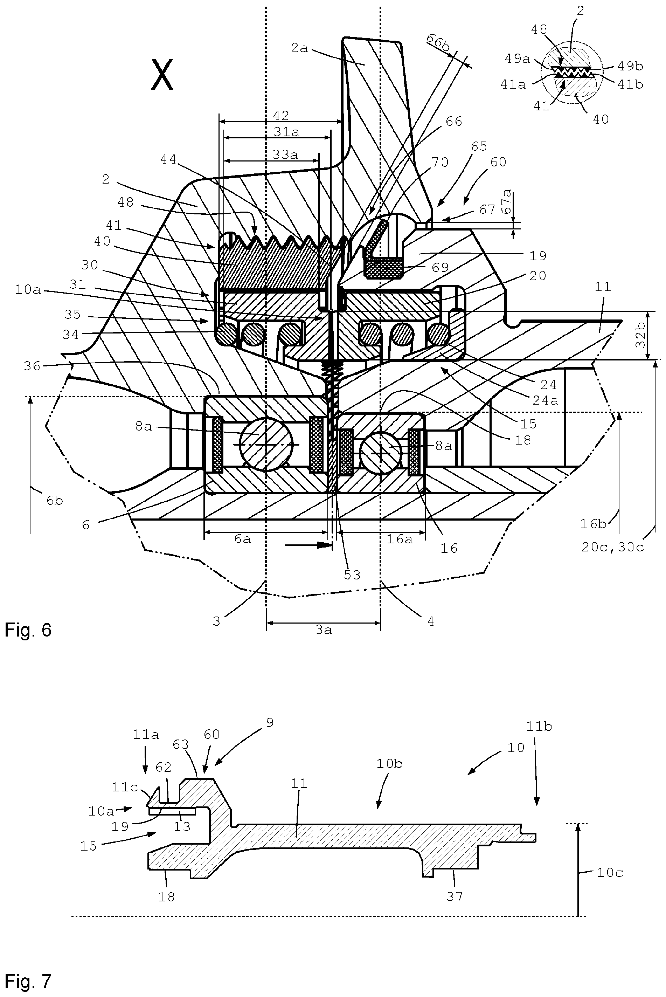

Ein lichter Innendurchmesser 20c, 30c der beiden Zahnscheibeneinrichtungen ist jeweils (erheblich) größer als ein Außendurchmesser der jeweiligen Wälzlager 6, 16. Die lichten Innendurchmesser 20c, 30c (vgl. Fig. 6) sind erheblich größer, da die Wälzlager 6, 16 an den Außendurchmessern 6b, 16b jeweils eine Innenwandung 18, 36 am Rotor 10 bzw. Nabengehäuse 2 tragen, die sich jeweils fingerartig unter den Aufnahmen 15, 35 aufeinander zu erstrecken.

Radial außerhalb der Innenwandung 18 am Rotor ist die Aufnahme 15 ausgebildet, in der die rotorseitige Zahnscheibeneinrichtung 20 drehfest aufgenommen ist. Radial außerhalb der Innenwandung 36 in dem Nabengehäuse ist die Aufnahme 35 ausgebildet, in der die nabenseitige Zahnscheibeneinrichtung 30 drehfest an dem Gewindering 40 aufgenommen ist.

Mit der Konstruktion wird bei einer Einbaubreite 25 von zum Beispiel 148 mm ein Abstand 27 der beiden Nabenlager von zwischen 55 mm und 60 mm und hier konkret zum Beispiel 57 mm ermöglicht. Der Abstand 3a der beiden Querschnittsebenen 3, 4 kann sehr gering sein und hier zum Beispiel 7 mm, 8 mm oder 9 mm betragen. Der Abstand 26 der beiden Rotorlager 16, 17 kann zwischen 27 mm und 35 mm liegen und beträgt hier zum Beispiel 32 mm. Der Abstand 28 kann bei 18 mm und der Abstand 29 bei 33 mm liegen.

Figur 6 zeigt das vergrößerte Detail X aus Figur 5. Auf der Nabenachse 5 sind das rotorseitige Nabenlager 6 mit einer Breite 6a und dessen nabenseitige Rotorlager 16 mit einer Breite 16a zu erkennen, zwischen denen ein dünner Abstandhalter 53 erkennbar ist. Der Abstandhalter 53 dient dazu, die beiden äußeren Lagerringe der Lager 6, 16 voneinander zu entkoppeln. Eine Breite des Abstandhalters 53 ist geringer als die Hälfte oder ein Viertel oder ein Achtel der axialen Breite 16a des nabenseitigen Rotorlagers 16.

Das rotorseitige Nabenlager 6 trägt eine Wandung 36 des Nabengehäuses 2, die sich fingerartig und insbesondere keilartig auf den Rotor 10 zu erstreckt und das rotorseitige Nabenlager 6 radial außen umgibt. Das Nabengehäuse 2 wird durch die Wandung 36 getragen. Radial darum herum ist die Aufnahme 35 ausgebildet, in der die nabenseitige Zahnscheibeneinrichtung 30 aufgenommen ist. Die nabenseitige Zahnscheibeneinrichtung 30 wird durch die Vorspanneinrichtung 34 in die Eingriffsstellung E vorbelastet.

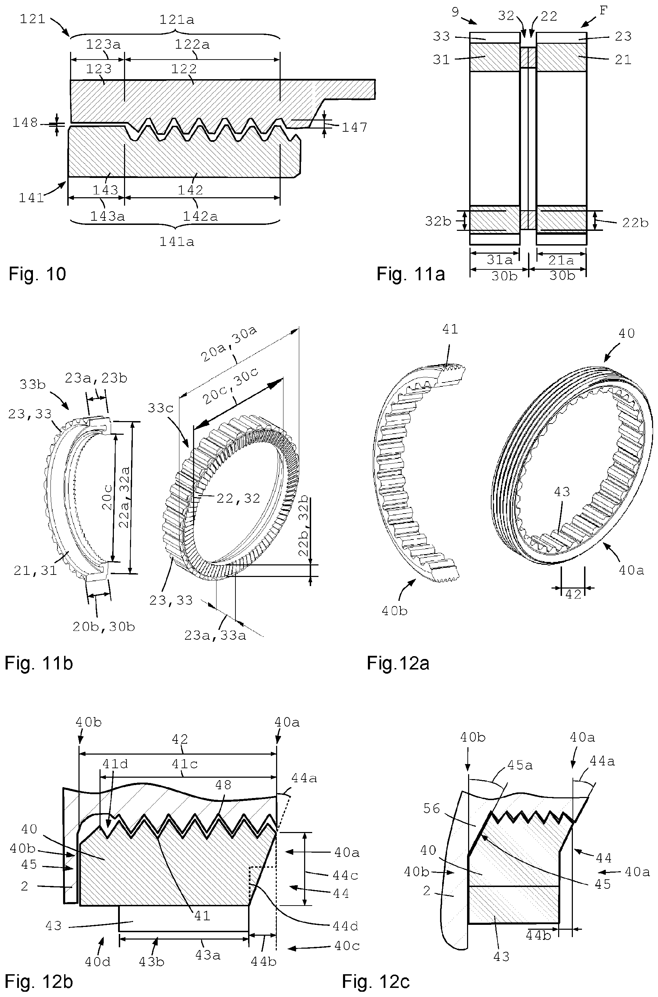

Die Zahnscheibeneinrichtung 30 verfügt über eine äußere Radialverzahnung 33 (vergleiche Figur 11b), die mit einer radialen Innenverzahnung 43 (vergleiche Figur 12a) in dem Gewindering 40 kämmt. Der Gewindering 40 ist über das Außengewinde 41 in das Innengewinde 48 in dem Nabengehäuse 2 eingeschraubt.

An der nabenseitigen Stirnseite 10 des Rotors 10 ist eine Aufnahme 15 ausgebildet, in der die rotorseitige Zahnscheibeneinrichtung 20 aufgenommen ist. Die rotorseitige Zahnscheibeneinrichtung 20 verfügt über eine zum Nabengehäuse ausgerichtete Stirnverzahnung 22. Die Stirnverzahnung 22 kämmt mit der Stirnverzahnung 32 an der nabenseitigen Zahnscheibeneinrichtung 30. Die Zahnscheibeneinrichtungen 20, 30 werden über die Vorspanneinrichtung 24, 34 jeweils axial aufeinander zu gedrückt.

Der Halter bzw. Einsatz 24a in der Aufnahme 15 an der nabenseitigen Stirnseite 10 des Rotors 10 sorgt dafür, dass identische Zahnscheibeneinrichtungen 20, 30 verwendet werden können, wodurch die Montage erleichtert wird, da Verwechslungen ausgeschlossen werden können. Produktionstechnisch ist es nötig, die Aufnahme 15 vergrößert zu gestalten, um die radiale Innenverzahnung 13 in dem Endabschnitt 60 des Rotors 10 anfertigen zu können. Es herrschen gleiche Bedingungen in den Aufnahmen 15, 35.

Eine axiale Breite 33a einer Radialverzahnung 33 der nabenseitigen Zahnscheibeneinrichtung 30 und die (vorzugsweise) identische axiale Breite 23a der Radialverzahnung 23 der rotorseitigen Zahnscheibeneinrichtung 20 kann insbesondere größer sein als eine axiale Breite 16a oder auch eine axiale Breite 6a eines Wälzlagers 6 bzw. 16.

Die axiale Breite 42 des Gewinderings 40 ist radial außen größer, da der Gewindering rotorseitig eine zentrale Vertiefung 44 aufweist, die hier als konische Vertiefung bzw. Anphasung 44 (vergleiche Figur 12b) ausgebildet ist. Dadurch kann die Gewindelänge des Außengewindes 41 vergrößert werden, was die Stabilität erhöht.

Die Eingriffskörper 21, 31 der rotorseitigen Zahnscheibeneinrichtung 20 und der nabenseitigen Zahnscheibeneinrichtung 30 weisen jeweils eine Radialverzahnung 23, 33 über eine axiale Länge 23a bzw. 33a auf, die deutlich größer ist als eine radiale Höhe 22b bzw. 32b der Stirnverzahnung 22 bzw. 32. Dadurch wird eine präzise Führung der beiden Zahnscheibeneinrichtungen in axialer Richtung gewährleistet. Die axiale Länge 21a, 31a der Eingriffskörper 21, 31 ist jeweils um die axiale Breite der Stirnverzahnungen größer.

Der Gewindering 40 kann über ein mehrgängiges Gewinde mit dem Nabengehäuse 2 verschraubt sein. Dazu ist oben rechts in Figur 6 eine optionale Ausgestaltung eingezeichnet, bei der zwei durchgängige und separate Gewindegänge 41a und 41b mit entsprechenden Gewindegängen 49a und 49b im Nabengehäuse 2 verschraubt werden.

Die Dichtungseinrichtung 65 zur Dichtung der Freilaufeinrichtung 9 vor Umwelteinflüssen umfasst hier einen nahezu horizontal ausgebildeten (äußeren) schmalen Dichtspalt 67 mit einer geringen radialen Höhe bzw. lichten Abmessung 67a, die weniger als 0,5 mm beträgt. Der äußere Dichtspalt 67 erstreckt sich zwischen einem vergrößerten Durchmesserbereich 63 an dem Endabschnitt 60 und einer radial nach innen ragenden Wandung 46 an dem Nabengehäuse 2.

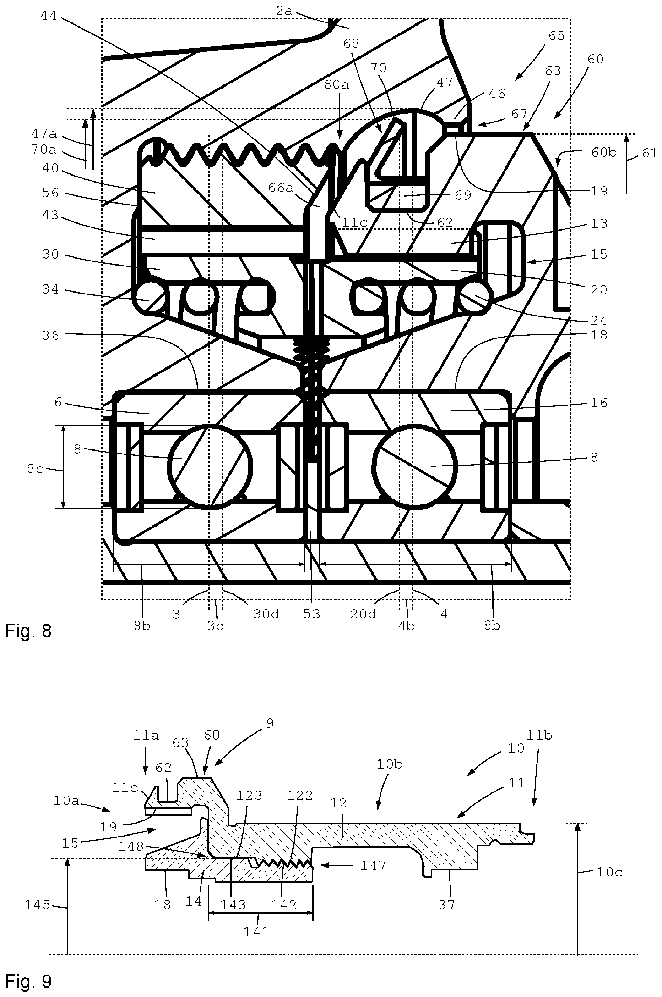

Von dort gesehen axial nach innen ist an dem Endabschnitt 60 radial außen eine Nut 62 ausgebildet, in der eine Dichtungseinheit 68 mit einem Ringabschnitt 69 aufgenommen ist. Von dem Ringabschnitt 69 erstreckt sich eine elastische Dichtlippe schräg aus der Nut 62 nach außen, sodass sich zwischen dem Ringabschnitt 69 und der elastischen Dichtlippe 70 ein V-förmiger Querschnitt ergibt, der axial nach außen zu dem äußeren Dichtspalt 67 hin geöffnet ist. Die Dichtlippe 70 ragt in eine Umfangsnut 47 (vergleiche Figur 8).

Axial noch weiter nach innen schließt sich ein konischer Spalt 66a bzw. Konusspalt an, der eine lichte Spaltweite 66b aufweist. Insgesamt umfasst die Dichtungseinrichtung 65 deshalb drei Dichtspalte, nämlich zum einen den Konusspalt 66a, dann den Spalt zwischen der elastischen Dichtlippe 70 und der Wandung der Dichtnut 47 in dem Nabengehäuse und den äußeren Dichtspalt 67 zwischen der Außenwandung 19 in dem vergrößerten Durchmesserbereich 63 an dem Endabschnitt 60 des Rotors 10.

In Figur 6 ist nochmals klar zu erkennen, dass sich die Querschnittsebene 4 durch die Wälzkörper 8a des nabenseitigen Rotorlagers 16, durch die Radialverzahnung 23 und durch die Dichtungseinheit 68 sowie den rotorseitigen Nabenflansch 2a erstreckt. Das nabenseitige Rotorlager 16 stützt die innere Radialwandung 18 des Rotorkörpers 11. Radial außerhalb davon ist die Aufnahme 15 angeordnet, in der die rotorseitige Zahnscheibeneinrichtung 20 drehfest mit dem Rotor 10 gekoppelt aufgenommen ist.

Durch den einfachen Aufbau können Montagefehler zuverlässig verhindert werden.

Figur 7 zeigt einen schematischen Querschnitt durch den Rotorkörper 11 des Rotors 10, der sich von dem nabenseitigen Ende 11a zu dem äußeren Ende 11b erstreckt. Auf der Außenseite des Rotorkörpers 11 ist die Ritzelaufnahme 10b vorgesehen, die einen Außendurchmesser 10c aufweist, der geringer ist als der Durchmesser der inneren Radialverzahnungen 13 an der Aufnahme 15 für die rotorseitige Zahnscheibeneinrichtung 20.

An dem Endbereich 60 befindet sich der vergrößerte Durchmesserbereich 63, der eine Wandung des Dichtspalts 67 zu Verfügung stellt. In der umlaufenden Nut 62 kann die Dichtungseinheit 68 angeordnet werden. An dem nabenseitigen Ende 11a ist der konische Abschnitt 11c ausgebildet, der zusammen mit der konischen Vertiefung 44 an dem Gewindering 40 den inneren Dichtspalt 66 bzw. Konusspalt 66a ausbildet. Radial innen ist die innere Radialwandung 18 zu erkennen, an der sich der Rotor 10 auf dem nabenseitigen Rotorlager 16 abstützt.

Figur 8 zeigt ein vergrößertes Detail einer Variante von Figur 6, wobei im Unterschied zur Ausführung nach Fig. 5 identisch große Wälzlager 6, 16 (mit identischen Breiten 8b) als nabenseitiges Rotorlager 16 und als rotorseitiges Nabenlager 6 verwendet werden. Das erleichtert die Montage und die Vorratshaltung nochmals, da die Anzahl unterschiedlicher Teile noch weiter reduziert wird. Auch hier wird die rotorseitige Zahnscheibeneinrichtung 20 in der Aufnahme 15 des Rotorkörpers 11 aufgenommen. Die radiale Innenverzahnung 13 an der Außenwandung 19 führt die Radialverzahnung 23 der rotorseitigen Zahnscheibeneinrichtung 20 in axialer Richtung. Durch die Vorspanneinrichtung 24 wird die Stirnverzahnung 22 in Richtung auf das Nabengehäuse zu gedrückt.

Der Außendurchmesser 70a der elastischen Dichtlippe 70 ist größer als der Außendurchmesser 61 des äußeren Dichtspalts 67. Das führt dazu, das axial durch den Dichtspalt 67 eindringendes Wasser zu einer Verformung der Dichtlippe 70 führt, wodurch sich diese (stärker) an die Wandung der Dichtnut 47 anlegt und eine noch größere Dichtwirkung erzielt.

Eine zentrale Querschnittsebene 20d (zentrale Zahnscheibenebene) durch die Radialverzahnung 23 der rotorseitigen Zahnscheibe ist nur um einen geringen Abstand 4b von einer Querschnittsebene 4 (Wälzkörperebene) durch die Wälzkörper 8a des nabenseitigen Rotorlagers 16 entfernt. Die Entfernung 4b zwischen den Querschnittsebenen 20d und 4 ist insbesondere kleiner als ein halber Durchmesser bzw. als der Radius eines Wälzkörpers 8 und ist besonders bevorzugt auch kleiner als die kleinste Wandstärke der hohlen Nabenachse 5. Entsprechendes gilt auch für die zentrale Querschnittsebene 30d durch die axiale Mitte der Radialverzahnung der rotorseitigen Zahnscheibeneinrichtung 30.

Auch hier ist der Abstand 3b zwischen den beiden Querschnittsebenen 3 (Wälzkörperebene) und 30d (zentrale Zahnscheibenebene) sehr klein und insbesondere kleiner als der halbe Durchmesser oder auch der halbe Radius eines Wälzkörpers 8a des rotorseitigen Nabenlagers 6.

Die zentrale Querschnittsebene 20d durch die Radialverzahnung 23 schneidet die Wälzkörper 8a des nabenseitigen Rotorlagers 16.

Auch die zentrale Querschnittsebene 30d durch die Radialverzahnung 33 schneidet die Wälzkörper 8a des rotorseitigen Nabenlagers 6. Dadurch können effektiv auch höchste Kräfte abgeleitet werden. Die Abstände 3b und 4b sind sehr klein und kleiner als der halbe Durchmesser 8c oder sogar kleiner als der halbe Radius der Wälzkörper 8a.

Figur 9 zeigt eine Abwandlung des Rotors 10, der hier aus zwei Rotorteilen 12 und 14 besteht. Der Rotorkörper 11 verfügt hier über ein erstes Rotorteil 12, welches die Ritzelaufnahme 10b zur Verfügung stellt. Des Weiteren ist an dem ersten Rotorteil 12 die Wandung 37 ausgebildet, mittels derer der Rotor 10 über das äußere Rotorlager 17 auf der Nabenachse 5 gelagert wird. An dem zweiten Rotorteil 14 ist die innere Radialwandung 18 ausgebildet, über die sich der Rotor 10 auf dem nabenseitigen Rotorlager 16 drehbar auf der Nabenachse 5 abstützt.

Das zweite Rotorteil 14 ist mit dem ersten Rotorteil 12 verschraubt. Um eine exakte Führung und einen Rundlauf zu gewährleisten, was insbesondere beim Rotor sehr wichtig ist, verfügen das erste Rotorteil 12 und das zweite Rotorteil 14 jeweils über einen Verbindungsbereich 121 und einen Verbindungsabschnitt 141. Der Verbindungsbereich 121 umfasst einen Gewindebereich 122 und einen Führungsbereich 123. Der Verbindungsabschnitt 141 verfügt über einen Gewindeabschnitt 142 und einen Führungsabschnitt 143. Der Führungsabschnitt 143 weist einen Durchmesser 145 auf.

Eine Länge 141a des Verbindungsabschnitts 141 des zweiten Rotorteils 14 entspricht insbesondere wenigstens 1/4 oder 1/3 einer Länge 14a des zweiten Rotorteils 14, insbesondere zwischen einem Viertel und der Hälfte der Länge des Rotorkörpers 11.

Ein Verhältnis einer Länge 143a des Führungsabschnitts 143 zu einem Durchmesser 145 des Führungsabschnitts 143 ist größer als 1:10. Vorzugsweise ist ein Verhältnis einer Länge 143a des Führungsabschnitts 143 zu einer Länge 141a des Verbindungsabschnitts 141 größer als 1:4.

Im montierten Zustand sind der Gewindebereich 122 und der Gewindeabschnitt 142 miteinander verschraubt. Für die nötige Zentrierung sorgen der Führungsbereich 123 und der Führungsabschnitt 143. Dabei ist die radiale Toleranz in dem Führungsabschnitt 143 geringer als die radiale Toleranz zwischen dem Gewindebereich 122 und dem Gewindeabschnitt 142.

Figur 10 zeigt das Zusammenwirken von dem Verbindungsbereich 121 und dem Verbindungsabschnitt 141 in einer vergrößerten schematischen Darstellung. Der Verbindungsbereich 121 erstreckt sich über eine Länge 121a, die sich aus der Länge 122a des Gewindebereichs 122 und der Länge 123a des Führungsbereichs 123 zusammensetzt.

Dementsprechend ist an dem zweiten Rotorteil 14 ein Verbindungsabschnitt 141 ausgebildet, der sich über eine Länge 141a erstreckt. Der Verbindungsabschnitt 141 setzt sich aus dem Gewindeabschnitt 142 und dem Führungsabschnitt 143 zusammen, die sich über eine Länge 142a bzw. 143a erstrecken. An dem Gewindebereich 122 (bzw. dem Gewindeabschnitt 142) liegt eine engere Toleranz 148 vor als in dem miteinander verschraubten Führungsbereich 123 (bzw. Führungsabschnitt 143) mit einer Toleranz 147. Dadurch wird eine hohe Präzision und Wiederholbarkeit der radialen Ausrichtung des Rotors 10 gewährleistet.

Figuren 11a und 11b zeigen die hier identischen Zahnscheibeneinrichtungen 20, 30, die jeweils über einen Eingriffskörper 21, 31 und eine Stirnverzahnung 22, 32 sowie eine äußere Radialverzahnung 23, 33 verfügen. Die äußeren Radialverzahnungen 23, 33 erstrecken sich in axialer Richtung über eine axiale Länge 23a, 33a. Die axiale Erstreckung 21a, 31a der Eingriffskörper 21, 31 ist jeweils wenigstens um die axiale Breite der Stirnverzahnungen 22, 32 größer als eine axiale Länge 23a, 33a der äußeren Radialverzahnungen 23, 33. Ein lichter Innendurchmesser 20c ist größer als die Außendurchmesser der Wälzlager 6, 16. Der Außendurchmesser 22a, 32a ist hier größer als der Außendurchmesser 10c der Ritzelaufnahme 10b.

Die Zahl der Zähne der Stirnverzahnung ist vorzugsweise größer als 72 und kann auch 90, 100, 110 oder 120 oder mehr betragen.

Die äußeren Radialverzahnungen 23, 33 der Zahnscheibeneinrichtungen 20, 30 und die radialen Innenverzahnungen 13, 43 weisen vorzugsweise zwischen 20 und 60 Radialzähne auf. Hier im Ausführungsbeispiel umfassen die Zahnscheibeneinrichtungen 20, 30 etwa 36 Radialzähne.

Eine radiale Erstreckung 22b, 32b der Stirnverzahnungen 22, 32 ist geringer als die axiale Länge 23a, 33a der Radialverzahnungen 23, 33.

In den Figuren 12a, 12b und 12c sind Varianten des Gewinderings 40 dargestellt, der jeweils über eine axiale Breite 42 verfügt und auf dem Außenumfang über ein vorzugsweise mehrgängiges Gewinde verfügt, mit dem der Gewindering in ein entsprechendes Gewinde in dem Nabengehäuse 2 eingeschraubt wird.

An dem rotorseitigen Ende 40a des Gewinderings 40 ist eine zentrale Vertiefung 44 hier in Form einer Anphasung bzw. konischen Vertiefung 44 ausgebildet, die unter einem Winkel 44a von zum Beispiel 30° verläuft und eine Tiefe 44b aufweist.

Der Gewindering 40 ist im bestimmungsgemäß montierten Zustand in das Nabengehäuse 2 eingeschraubt. Die nabenseitige Zahnscheibeneinrichtung 30 der Freilaufeinrichtung 9 ist darin aufgenommen. Die Stirnverzahnung 32 weist in Richtung des Rotors 10 und wird über eine Vorspanneinrichtung 24 in die Eingriffsstellung (E) vorbelastet.

Der Gewindering 40 weist eine Außenkontur 41d mit einem Außengewinde 41 auf und verfügt über eine zentrale Durchgangsöffnung 40c mit einer Innenkontur 40d. Die Innenkontur 40d verfügt über eine unrunde innere Koppelkontur 43b, die mit einer passenden unrunden äußeren Koppelkontur 33b auf dem Außenumfang 33c der nabenseitigen Zahnscheibeneinrichtung 30 in Antriebsrichtung drehfest koppelt. Die innere Koppelkontur 43b kann sich über die gesamte Länge oder nur einen Teil der Länge der Innenkontur 40d erstrecken.

Der Gewindering 40 weist am rotorseitigen Ende 40a eine zentrale Vertiefung 44 auf, sodass sich das Außengewinde 41 an dem Gewindering 40 axial weiter nach außen in Richtung auf den Rotor 10 erstreckt als die innere Koppelkontur 43b. Dadurch wird es möglich, das Außengewinde 41 des Gewinderings 40 in Richtung auf den Rotor 10 hin zu verbreitern. Es ist eine bessere Aufnahme des Gewinderings 40 in dem Nabengehäuse 2 möglich. Die Festigkeit wird verbessert. Das Außengewinde 41 wird verlängert.

Dadurch ist eine axiale Länge 41c des Außengewindes 41 größer als eine axiale Länge 33a der Koppelstruktur, die die innere Koppelkontur 43b und die äußere Koppelkontur 33b umfasst. Der Gewindering 40 wird mit dem Außengewinde 41 in ein Innengewinde 48 des Nabengehäuses 2 eingeschraubt.

Die nabenseitige Zahnscheibeneinrichtung 30 ist radial innerhalb des Gewinderings 40 über die Koppelstruktur 33b, 43b in Antriebsrichtung drehfest und axial bewegbar aufgenommen. Der Gewindering 40 weist am rotorseitigen Ende 40a eine zentrale und hier zentrische Vertiefung 44 auf. Die axiale Breite 41c des Außengewindes 41 ist breiter als die axiale Breite 33a der Koppelstruktur.

Die zentrale Vertiefung 44 ist in der Variante nach Figur 12b als konische Vertiefung ausgebildet. Die Vertiefung 44 weist in allen Ausführungsbeispielen eine axiale Tiefe 44b von wenigstens 5% (und insbesondere wenigstens 10%) der axialen Breite 42 des Gewinderings 40 auf. Eine axiale Länge 41c der Außenkontur 41d des Gewinderings 40 ist größer als eine axiale Länge 43a der radialen Innenverzahnung 43 (als innerer Koppelkontur 43b).

Die axiale Tiefe 44b der zentralen Vertiefung 44 beträgt zwischen 5% und 25% der axialen Breite 42 des Gewinderings 40 und vorzugsweise zwischen 10% und 20% der axialen Breite 42 des Gewinderings 40. Die axiale Tiefe 44b der zentralen Vertiefung 44 liegt vorzugsweise zwischen 0,5 mm und 3 mm.

Die zentrale Vertiefung 44 kann in allen Ausgestaltungen auch gestuft und z.B. als abgestufte Vertiefung 44d ausgeführt sein, wie beispielsweise gestrichelt in Figur 12b angedeutet. Möglich ist auch eine abgestufte und konische Ausgestaltung. Vorzugsweise ist die zentrale Vertiefung 44 konisch oder auch bauchig als zentrische Anphasung ausgebildet. Ein Winkel oder Konuswinkel 44a der (konischen) Vertiefung 44 zu einer Ebene quer zu einer Symmetrieachse der Nabe oder Nabenachse liegt insbesondere zwischen 5% und 30°.

Im Ausführungsbeispiel umfasst die innere Koppelkontur 43b eine radiale Innenverzahnung 43 an dem Gewindering 40 oder ist als solche ausgebildet. Die äußere Koppelkontur 33b an der nabenseitigen Zahnscheibeneinrichtung 30 umfasst eine äußere Radialverzahnung 33 oder ist als solche ausgebildet. Ein an der Stirnseite 10a des Rotors 10 ausgebildeter Konusabschnitt 11c taucht im montierten Zustand berührungsfrei in die zentrale Vertiefung 44 an dem Gewindering 40 ein. Dazwischen wird ein Dichtspalt ausgebildet.

An dem anderen Ende 40b kann ein konischer Stützabschnitt 45 ausgebildet sein (vgl. Fig. 12c), der sich unter dem konischen Winkel 45a (z. B. 30°) erstreckt. Durch einen solchen konischen Stützabschnitt 45 kann axialer Bauraum spart werden. Möglich ist es aber auch, dass der Stützabschnitt 45 senkrecht zu Symmetrieachse ausgebildet ist. Das erleichtert die Fertigung.

Insgesamt wird eine vorteilhafte Nabe 1 zur Verfügung gestellt, die einfach aufgebaut ist. Die Nabe 1 ist leicht zu montieren und verfügt nur über eine relativ geringe Teilezahl. Es wird eine hohe Stabilität erreicht. Durch eine hohe Zähnezahl der Stirnverzahnung kann ein sehr geringer Eingriffswinkel zur Verfügung gestellt werden.

Durch die Anordnung der rotorseitigen Zahnscheibeneinrichtung 20 in der Aufnahme 15 in dem Rotor kann eine kompakte Nabe 1 zur Verfügung gestellt werden, bei der die rotorseitige Zahnscheibeneinrichtung 20 in der inneren Radialverzahnung 13 des Rotors geführt wird. Dadurch kann eine hochqualitative axiale Führung gewährleistet werden. Der große Durchmesser der Radialverzahnung und damit der axialen Führung verhindert das Verkippen und Verkanten und sorgt für eine zuverlässige Funktion.

### Bezugszeichenliste:

| | | | |
|---|---|---|---|
| 1 | Nabe | 148 | Toleranz von 143/123 |
| 2 | Nabengehäuse | 15 | Aufnahme |
| 2a | Nabenflansch | 16 | nabenseitiges Rotorlager |
| 2b | Nabenflansch | 16a | axiale Breite |
| 3 | Querschnittsebene, Wälzkörperebene | 16b | Außendurchmesser |
| | | 17 | äußeres Rotorlager |
| 3a | Abstand von 3, 4 | 18 | innere Radialwandung |
| 3b | Abstand 3, 30d | 19 | Außenwandung |
| 4 | Querschnittsebene, Wälzkörperebene | 20 | rotorseitige Zahnscheibeneinrichtung |
| 4b | Abstand 4, 20d | 20a | Außendurchmesser |
| 5 | Nabenachse | 20b | axiale Breite |
| 5a | Durchgangsöffnung | 20c | lichter Innendurchmesser |
| 6 | rotorseitiges Nabenlager | 20d | zentrale |
| 6a | axiale Breite | | Querschnittsebene |
| 6b | Außendurchmesser | 21 | Eingriffskörper |
| 7 | äußeres Nabenlager | 21a | axiale Erstreckung |
| 8 | Wälzlager | 22 | Stirnverzahnung |
| 8a | Wälzkörper | 22a | Außendurchmesser |
| 8b | axiale Breite | 22b | radiale Höhe |
| 8c | Durchmesser 8a | 23 | Radialverzahnung |
| 9 | Freilaufeinrichtung | 23a | axiale Länge |
| 10 | Rotor | 24 | Vorspanneinrichtung |
| 10a | nabenseitige Stirnseite | 24a | Halter |
| 10b | Ritzelaufnahme | 25 | Einbaulänge |
| 10c | Außendurchmesser 10b | 26,27 | Lagerabstand |
| 11 | Rotorkörper | 28 | Abstand |
| 11a | nabenseitiges Ende | 29 | Abstand |
| 11b | äußeres Ende | 30 | nabenseitige |
| 11c | Konusabschnitt | | Zahnscheibeneinrichtung |
| 12 | erstes Rotorteil | 30a | Außendurchmesser |
| 121 | Verbindungsbereich | 30b | axiale Breite |
| 121a | Länge von 121 | 30c | lichter Innendurchmesser |
| 122 | Gewindebereich | 30d | zentrale |
| 122a | Länge von 122 | | Querschnittsebene |
| 123 | Führungsbereich | 31 | Eingriffskörper |
| 123a | Länge von 123 | 31a | axiale Erstreckung |
| 13 | radiale Innenverzahnung | 32 | Stirnverzahnung |
| 14 | zweites Rotorteil | 32b | radiale Höhe |
| 141 | Verbindungsabschnitt | 33 | Radialverzahnung |
| 141a | Länge von 141 | 33a | axiale Länge |
| 142 | Gewindeabschnitt | 33b | äußere Koppelkontur |
| 142a | Länge von 142 | 33c | Außenumfang |
| 143 | Führungsabschnitt | 34 | Vorspanneinrichtung |
| 143a | Länge von 143 | 35 | Aufnahme |
| 145 | Durchmesser von 143 | 36 | Innenwandung |
| 147 | Toleranz von 142/122 | 37 | Wandung |
| 38 | Bremsscheibenaufnahme | 58 | Spanneinrichtung |
| 40 | Gewindering | 59 | Spannachse |
| 40a | rotorseitiges Ende, axiale Außenseite | 59a | Endstück |
| | | 59b | Durchmesser |
| 40b | nabenseitiges Ende, axiale Innenseite | 60 | Endabschnitt |
| | | 60a | nabenseitiges Ende (60) |
| 40c | zentrale Durchgangsöffnung | 60b | anderes Ende von 60 |
| | | 61 | Durchmesser |
| 40d | Innenkontur von 40 | 62 | Nut |
| 41 | Außengewinde | 63 | vergrößerter Durchmesserbereich |
| 41a,b | Gewindegang | | |
| 41c | axiale Länge | 65 | Dichtungseinrichtung |
| 41d | Außenkontur | 66 | innerer Dichtspalt |
| 42 | axiale Breite | 66a | Konusspalt |
| 43 | radiale Innenverzahnung | 66b | lichte Spaltweite |
| 43a | axiale Länge | 67 | äußerer Dichtspalt |
| 43b | innere Koppelkontur | 67a | lichte Abmessung |
| 44 | zentrale Vertiefung, konische Vertiefung | 68 | Dichtungseinheit |
| | | 69 | Ringabschnitt |
| 44a | Winkel | 70 | Dichtlippe/elastische Wandung |
| 44b | Tiefe | | |
| 44c | Höhe | 70a | Außendurchmesser |
| 44d | abgestufte Vertiefung | 100 | Fahrrad |
| 45 | (konischer) Stützabschnitt | 101 | Rad, Vorderrad |
| | | 102 | Rad, Hinterrad |
| 45a | Winkel | 103 | Rahmen |
| 46 | Dichtwandung | 104 | Gabel, Federgabel |
| 47 | Dichtnut | 105 | Hinterraddämpfer |
| 47a | Durchmesser | 106 | Lenker |
| 48 | Gewinde in 2 | 107 | Sattel |
| 49a,b | Gewindegang | 109 | Speiche |
| 50,51 | Endanschlag | 110 | Felge |
| 52 | Hülsenkörper | 111 | Ritzeleinrichtung |
| 53 | Abstandhalter | 112 | Tretkurbel |
| 54,55 | radiale Verdickungen | F | Freilaufzustand |
| 54a | Absatz | E | Eingriffsstellung |
| 55a | Absatz | | |
| 56 | Aufnahmekontur (konisch) | | |

## Patentansprüche

1. Nabe (1) für wenigstens teilweise muskelbetriebene Fahrzeuge und insbesondere Fahrräder (100) umfassend eine Nabenachse (5), ein Nabengehäuse (2), einen Rotor (10), und eine Freilaufeinrichtung (9),
wobei das Nabengehäuse (2) mit wenigstens zwei axial voneinander beabstandeten Nabenlagern (6, 7) drehbar gelagert ist, nämlich wenigstens einem näher an dem Rotor (10) angeordneten rotorseitigem Nabenlager (6) und wenigstens einem weiter von dem Rotor (10) entfernten äußeren Nabenlager (7),
und wobei der Rotor (10) mit wenigstens zwei axial voneinander beabstandeten Rotorlagern (16, 17) drehbar gelagert ist, nämlich einem näher an dem Nabengehäuse (2) angeordneten nabenseitigen Rotorlager (16) und wenigstens einem weiter von dem Nabengehäuse (2) entfernten äußeren Rotorlager (17)
und wobei die Freilaufeinrichtung (9) eine mit dem Nabengehäuse gekoppelte nabenseitige Zahnscheibeneinrichtung (30) und eine damit zusammenwirkende und mit dem Rotor gekoppelte rotorseitige Zahnscheibeneinrichtung (20) umfasst, welche jeweils eine Stirnverzahnung (22,32) zum Eingriff ineinander aufweisen, und über wenigstens eine Vorspanneinrichtung (24, 34) in eine Eingriffsstellung (E) vorbelastet werden,
wobei die Stirnverzahnung (32) der nabenseitigen Zahnscheibeneinrichtung (30) axial zu dem Rotor (10) ausgerichtet ist,
und wobei die Stirnverzahnung (22) der rotorseitigen Zahnscheibeneinrichtung (20) axial zu dem Nabengehäuse (2) ausgerichtet ist,
und wobei ein lichter Innendurchmesser (20c) der rotorseitigen Zahnscheibeneinrichtung (20) größer ist als ein Außendurchmesser (16b) des nabenseitigen Rotorlagers (16), **dadurch gekennzeichnet,**
**dass** die rotorseitige Zahnscheibeneinrichtung (20) radial innerhalb des Rotors (10) aufgenommen ist und über eine äußere Radialverzahnung (23) mit einer radialen Innenverzahnung (13) in dem Rotor (10) in Antriebsrichtung drehfest mit dem Rotor (10) gekoppelt ist.

2. Nabe nach dem vorhergehenden Anspruch, wobei von der rotorseitigen Zahnscheibeneinrichtung (20) wenigstens die Stirnverzahnung (22) radial innerhalb des Nabengehäuses (2) aufgenommen ist.

3. Nabe nach dem vorhergehenden Anspruch, wobei sich die rotorseitige Zahnscheibeneinrichtung (20), das nabenseitige Rotorlager (16) und ein rotorseitiger Nabenflansch (2a) an dem Nabengehäuse (2) in einer gemeinsamen Querschnittsebene (4) quer zu einer Längserstreckung der Nabenachse befinden.

4. Nabe nach einem der vorhergehenden Ansprüche, wobei die nabenseitige Zahnscheibeneinrichtung (30) radial innerhalb des Nabengehäuses (2) aufgenommen ist und über eine äußere Radialverzahnung (33) an der nabenseitigen Zahnscheibeneinrichtung (30) mit einer radialen Innenverzahnung (43) in dem Nabengehäuse (2) in Antriebsrichtung drehfest mit dem Nabengehäuse (2) gekoppelt ist und wobei die nabenseitige Zahnscheibeneinrichtung (30) und die rotorseitige Zahnscheibeneinrichtung (30) beide jeweils gegen eine Vorspannkraft wenigstens einer Vorspanneinrichtung (24, 34) von einer Eingriffsstellung (E) in eine Freilaufstellung (F) überführbar sind.

5. Nabe nach einem der vorhergehenden Ansprüche, wobei ein lichter Innendurchmesser (30c) der nabenseitigen Zahnscheibeneinrichtung (30) größer ist als ein Außendurchmesser (6b) des rotorseitigen Nabenlagers (6).

6. Nabe nach einem der vorhergehenden Ansprüche, wobei
wenigstens ein Nabenlager (6,7) und wenigstens ein Rotorlager (16,17) als Wälzlager (8) ausgebildet sind und jeweils über eine Mehrzahl an Wälzkörpern (8a) verfügen
und wobei eine zentrale Querschnittsebene (20d) durch die rotorseitige Zahnscheibeneinrichtung (20) die Wälzkörper des nabenseitigen Rotorlagers (16) schneidet
und/oder wobei eine zentrale Querschnittsebene (30d) durch die nabenseitige Zahnscheibeneinrichtung (30) die Wälzkörper des rotorseitigen Nabenlagers (16) schneidet
und/oder wobei ein axialer Abstand (4b) der zentralen Querschnittsebene (20d) durch die rotorseitige Zahnscheibeneinrichtung (20) von einer Querschnittsebene (4) durch die Wälzkörper (8a) des nabenseitigen Rotorlagers (16) kleiner ist als der Durchmesser oder der Radius eines Wälzkörpers (8a).

7. Nabe nach einem der vorhergehenden Ansprüche, wobei ein Außendurchmesser (20a) der rotorseitigen Zahnscheibeneinrichtung (20) und/oder ein Außendurchmesser (22a) der Stirnverzahnung (22) der rotorseitigen Zahnscheibeneinrichtung (20) größer ist als ein Außendurchmesser (10c) der Ritzelaufnahme (10b).

8. Nabe nach einem der vorhergehenden Ansprüche, wobei die nabenseitige Zahnscheibeneinrichtung (30) eine äußere Radialverzahnung (33) aufweist, welche mit einer radialen Innenverzahnung (43) in dem Nabengehäuse (2) im Eingriff steht und demgegenüber axial bewegbar ist
und wobei die radiale Innenverzahnung (43), mit der die äußere Radialverzahnung (33) der nabenseitigen Zahnscheibeneinrichtung (30) zusammenwirkt, an einem in das Nabengehäuse (2) eingeschraubten Gewindering (40) ausgebildet ist.

9. Nabe nach dem vorhergehenden Anspruch, wobei der Gewindering (40) an der axialen Außenseite (40a) eine zentrale Vertiefung (44) aufweist, in welche ein an der Stirnseite (10a) des Rotors (10) ausgebildeter Konusabschnitt (11c) berührungsfrei eintaucht.

10. Nabe nach einem der beiden vorhergehenden Ansprüche, wobei der Gewindering (40) auf der dem Rotor (10) abgewandten axialen Innenseite (40b) einen Stützabschnitt (45) aufweist, welcher an einer entsprechend ausgebildeten Aufnahme (56) in dem Nabengehäuse anliegt.

11. Nabe nach einem der drei vorhergehenden Ansprüche, wobei der Gewindering (40) an der radialen Außenseite in axialer Richtung breiter (42) als an der radialen Innenseite ist.

12. Nabe nach einem der drei vorhergehenden Ansprüche, wobei sich das Außengewinde (41) des Gewinderings (40) axial nach außen über die nabenseitige Zahnscheibeneinrichtung (30) hinaus und bis radial über die rotorseitige Zahnscheibeneinrichtung (20) hin erstreckt und diese zum Teil überdeckt.

13. Nabe nach einem der vorhergehenden Ansprüche, wobei
wenigstens eine Zahnscheibeneinrichtung (20, 30) einen Eingriffskörper (21, 31) aufweist, an dem die Stirnverzahnung (22, 32) über eine radiale Höhe (22b, 32b) und die Radialverzahnung (23, 33) über eine axiale Länge (23a, 33a) ausgebildet sind, wobei die axiale Länge (23a, 33a) größer ist als die radiale Höhe (22b, 32b)
und wobei eine axiale Erstreckung (21a, 31a) des Eingriffskörpers (21, 31) größer ist als wenigstens eine axiale Breite (8b) eines Wälzkörper (8a) und wobei sich die Wälzkörper (8a) des rotorseitigen Nabenlagers (6) und des nabenseitigen Rotorlagers (16) jeweils in einer Querschnittsebene (3, 4) befinden
und wobei ein Abstand (3a) der beiden Querschnittsebenen (3, 4) kleiner ist als die axiale Länge (23a, 33a) der Radialverzahnung (23, 33) eines Eingriffskörpers (21, 31) wenigstens einer Zahnscheibeneinrichtung (20, 30).

14. Nabe nach einem der vorhergehenden Ansprüche, wobei sich die Wälzkörper (8a) des rotorseitigen Nabenlagers (6) und des nabenseitigen Rotorlagers (16) jeweils in einer Querschnittsebene (3, 4) befinden und wobei ein
Abstand (3a) der beiden Querschnittsebenen (3, 4) kleiner ist als eine axiale Breite (20b, 30b) beider Zahnscheibeneinrichtungen (20, 30) im Eingriffszustand des Gewinderings (40).

15. Nabe nach einem der vorhergehenden Ansprüche, wobei die nabenseitige Zahnscheibeneinrichtung (30) und die rotorseitige Zahnscheibeneinrichtung (20) im Wesentlichen gleich ausgebildet sind
und wobei beiden Zahnscheibeneinrichtungen (20, 30) jeweils wenigstens eine Vorspanneinrichtung (24, 34) zugeordnet ist, welche die Zahnscheibeneinrichtungen (10, 20) jeweils schwimmend aufeinander zu drücken und wobei beide Vorspanneinrichtungen (24, 34) im Wesentlichen gleich ausgebildet sind.

## Claims

1. A hub (1) for at least partially muscle powered vehicles and, in particular, bicycles (100) including a hub axle (5), a hub housing (2), a rotor (10), and a freewheel device (9),
wherein the hub housing (2) is rotatably mounted with at least two hub bearings (6, 7) axially spaced apart from one another, namely, at least one rotor-side hub bearing (6) arranged nearer to the rotor (10) and at least one outer hub bearing (7) further distant from the rotor (10),
and wherein the rotor (10) is rotatably mounted with at least two rotor bearings (16, 17) axially spaced apart from one another, namely, a hub-side rotor bearing (16) arranged nearer to the hub housing (2), and at least one outer rotor bearing (17) further distant from the hub housing (2),
and wherein the freewheel device (9) includes a hub-side toothed disc device (30) coupled to the hub housing and a rotor-side toothed disc device (20) interacting therewith and coupled to the rotor, which each comprises a spare toothing (22, 32) for engagement with one another, and are preloaded into an engagement position in (E) via at least one preloading device (24, 34),
wherein the spur toothing (32) of the hub-side toothed disc device (30) is axially oriented to the rotor (10),
and wherein the spare toothing (22) of the rotor-side toothed disc device (20) is axially oriented to the hub housing (2),
and wherein a clear inner diameter (20c) of the rotor-side toothed disc device (20) is greater than an outer diameter (16b) of the hub-side rotor bearing (16), **characterised**
**in that** the rotor-side disc (20) is radially received within the rotor (10) and is non-rotatably coupled to the rotor (10) in driving direction via an outer radial toothing (23) with a radial inner toothing (13) in the rotor (10).

2. The hub according to the preceding claim,
wherein of the rotor-side toothed disc device (20) at least the spur toothing (22) is radially received within the hub housing (2).

3. The hub according to the preceding claim,
wherein the rotor-side toothed disc device (20), the hub-side rotor bearing (16) and a rotor-side hub flange (2a) are situated on the hub housing (2) in a common cross-sectional plane (4) transversely to a longitudinal extent of the hub axle.

4. The hub according to any one of the preceding claims, wherein the hub-side toothed disc device (30) is radially received within the hub housing (2) and non-rotatably coupled to the hub housing (2) in driving direction via an outer radial toothing (33) on the hub-side toothed disc device (30) with a radial inner toothing (43) in the hub housing (2), and wherein the hub-side toothed disc device (30) and the rotor-side toothed disc device (30) both can each be transferred against a preload force of at least one preloading device (24, 34) from an engagement position (E) into a freewheel position (F).

5. The hub according to any one of the preceding claims, wherein a clear inner diameter (30c) of the hub-side toothed disc device (30) is greater than an outer diameter (6b) of the rotor-side hub bearing (6).

6. The hub according to any one of the preceding claims, wherein at least one hub bearing (6, 7) and at least one rotor bearing (16, 17) are formed as rolling bearings (8), and each have a plurality of rolling bodies (8a)
and wherein a central cross-sectional plane (20d) through the rotor-side toothed disc device (20) intersects the rolling bodies of the hub-side rotor bearing (16),
and/or wherein a central cross-sectional plane (30d) through the hub-side toothed disc device (30) intersects the rolling bodies of the rotor-side hub bearing (16)
and/or wherein an axial distance (4b) of the central cross-sectional plane (20d) through the rotor-side toothed disc device (20) from a cross-sectional plane (4) through the rolling bodies (8a) of the hub-side rotor bearing (16) is smaller than the diameter or the radius of a rolling body (8a).

7. The hub according to any one of the preceding claims, wherein an outer diameter (20a) of the rotor-side toothed disc device (20) and/or an outer diameter (22a) of the spur toothing (22) of the rotor-side toothed disc device (20) is greater than an outer diameter (10c) of the sprocket mount (10b).

8. The hub according to any one of the preceding claims, wherein the hub-side toothed disc device (30) comprises an outer radial toothing (33), which is in engagement with a radial inner toothing (43) in the hub housing (2) and axially moveable relative to the same
and wherein the radial inner toothing (43), with which the outer radial toothing (33) of the hub-side toothed disc device (30) interacts, is formed on a threaded ring (40) screwed into the hub housing (2).

9. The hub according to the preceding claim,
wherein the threaded ring (40) on the axial outside (40a) comprises a central recess (44) into which a cone section (11c) formed on the end face (10a) of the rotor (10) dips without contact.

10. The hub according to any one of the two preceding claims,
wherein the threaded ring (40) on the axial inside (40b) facing away from the rotor (10) comprises a support section (45), which lies against a suitably formed mount (56) in the hub housing.

11. The hub according to any one of the three preceding claims,
wherein the threaded ring (40) on the radial outside is wider (42) in the axial direction than on the radial inside.

12. The hub according to any one of the three preceding claims,
wherein the external thread (41) of the threaded ring (40) extends axially to the outside beyond the hub-side toothed disc device (30) as far as to the rotor-side toothed disc device (20), partly overlapping the same.

13. The hub according to any one of the preceding claims, wherein at least one toothed disc device (20, 30) comprises an engagement body (21, 31), on which the spare toothing (22, 32) over a radial height (22b, 32b) and the radial toothing (23, 33) over an axial length (23a, 33a) are formed,
wherein the axial length (23a, 33a) is greater than the radial height (22b, 32b)
and wherein an axial extent (21a, 31a) of the engagement body (21, 31) is greater than at least one axial width (8b) of a rolling body (8a),
and wherein the rolling bodies (8a) of the rotor-side hub bearing (6) and of the hub-side rotor bearing (16) are each situated in a cross-sectional plane (3, 4) and wherein a distance (3a) of the two cross-sectional planes (3, 4) is smaller than the axial length (23a, 33a) of the radial toothing (23, 33) of an engagement body (21, 31) of at least one toothed disc device (20, 30).

14. The hub according to any one of the preceding claims, wherein the rolling bodies (8a) of the rotor-side hub bearing (6) and of the hub-side rotor bearing (16) are each situated in a cross-sectional plane (3, 4) and wherein a distance (3a) of the two cross-sectional planes (3, 4) is smaller than an axial width (20b, 30b) of both toothed disc devices (20, 30) in the engaged state of the threaded ring (40).

15. The hub according to any one of the preceding claims, wherein the hub-side toothed disc device (30) and the rotor-side toothed disc device (20) are substantially formed the same
and wherein both toothed disc devices (20, 30) are each assigned at least one preloading device (24, 34), which each floatingly press the toothed disc devices (10, 20) towards one another, and wherein both preloading devices (24, 34) are substantially formed the same.

## Revendications

1. Moyeu (1) pour des véhicules actionnés au moins en partie de façon musculaire et en particulier des bicyclettes (100), comprenant un axe de moyeu (5), un carter de moyeu (2), un rotor (10), et un système de roue libre (9),
sachant que le carter de moyeu (2) est logé pouvant tourner avec au moins deux paliers de moyeu (6, 7) axialement distants l'un de l'autre, à savoir au moins un palier de moyeu (6) du côté rotor disposé plus près sur le rotor (10) et au moins un palier de moyeu (7) extérieur plus éloigné du rotor (10),
et sachant que le rotor (10) est logé pouvant tourner avec au moins deux paliers de rotor (16, 17) axialement distants l'un de l'autre, à savoir un palier de moyeu (16) du côté moyeu disposé plus près sur le carter de moyeu (2) et au moins un palier de rotor (17) extérieur plus éloigné du carter de moyeu (2),
et sachant que le système de roue libre (9) comprend un système à disque denté (30) du côté moyeu couplé avec le carter de moyeu et un système à disque denté (20) du côté rotor coopérant avec celui-ci, couplé avec le rotor, lesquels comportent respectivement une denture frontale (22, 32) pour venir en prise l'un dans l'autre et sont précontraints dans une position d'engrènement (E) par au moins un dispositif de précontrainte (24, 34),
sachant que la denture frontale (32) du système à disque denté (30) du côté moyeu est orientée axialement vers le rotor (10),
et sachant que la denture frontale (22) du système à disque denté (20) du côté rotor est axialement orientée vers le carter de moyeu (2),
et sachant qu'un diamètre intérieur (20c) du système à disque denté (20) du côté rotor est plus grand qu'un diamètre extérieur (16b) du palier de rotor (16) du côté moyeu,
**caractérisé en ce que**
le système à disque denté (20) est logé radialement à l'intérieur du rotor (10) et est couplé solidaire en rotation dans le sens d'entraînement par une denture radiale extérieure (23) avec le rotor (10) avec une denture intérieure radiale (13) dans le rotor (10).

2. Moyeu selon la revendication précédente, sachant que du système à disque denté (20) du côté rotor au moins la denture frontale (22) est logée radialement à l'intérieur du carter de moyeu (2).

3. Moyeu selon la revendication précédente, sachant que le système à disque denté (20), le palier de rotor (16) du côté moyeu et une joue de moyeu (2a) du côté rotor sur le carter de moyeu (2) se trouvent dans un plan de section transversale commun (4) transversalement à une extension longitudinale de l'axe de moyeu.

4. Moyeu selon l'une quelconque des revendications précédentes, sachant que le système à disque denté (30) du côté moyeu est logé radialement à l'intérieur du carter de moyeu (2) et est couplé solidaire en rotation dans le sens d'entraînement avec le carter de moyeu (2) par une denture radiale extérieure (33) sur le système à disque denté(30) avec une denture intérieure radiale (43) dans le carter de moyeu (2) et sachant que le système à disque denté (30) du côté moyeu et le système à disque denté (2) du côté rotor peuvent être respectivement transférés tous les deux d'une position d'engrènement (E) à une position de roue libre (F) envers une force de précontrainte d'au moins un dispositif de précontrainte (24, 34).

5. Moyeu selon l'une quelconque des revendications précédentes, sachant qu'un diamètre intérieur (30c) du système à disque denté (30) du côté moyeu est plus grand qu'un diamètre extérieur (6b) du palier de moyeu (6) du côté rotor.

6. Moyeu selon l'une quelconque des revendications précédentes, sachant qu'au moins un palier de moyeu (6, 7) et au moins un palier de rotor (16, 17) sont constitués comme des paliers à roulement (8) et disposent respectivement d'une pluralité de corps de roulement (8a),
et sachant qu'un plan transversal central (20d) coupe les corps de roulement du palier de rotor du côté moyeu (16) par le système à disque denté du côté rotor (20) et/ou sachant qu'un plan transversal central (30d) coupe les corps de roulement du palier de moyeu (16) du côté rotor par le système à disque dentédu côté moyeu (30),
et/ou sachant qu'une distance axiale (4b) du plan transversal central (20d) à travers le système à disque denté (20) du côté rotor d'un plan transversal (4) à travers les corps de roulement (8a) du palier de rotor du côté moyeu (16) est plus petite que le diamètre ou le rayon d'un corps de roulement (8a).

7. Moyeu selon l'une quelconque des revendications précédentes, sachant qu'un diamètre extérieur (20a) du système à disque denté du côté rotor (20) et/ou un diamètre extérieur (22a) de la denture frontale (22) du système à disque denté (20) du côté rotor est plus grand qu'un diamètre extérieur (10c) du logement de pignon (10b).

8. Moyeu selon l'une quelconque des revendications précédentes, sachant que le système à disque denté (30) du côté moyeu comporte une denture radiale extérieure (33), laquelle est en prise avec une denture intérieure radiale (43) dans le carter de moyeu (2) et peut être par contre déplacée axialement,
et sachant que la denture intérieure radiale (43) avec laquelle la denture radiale extérieure (33) du système à disque denté (30) du côté moyeu coopère, est constituée sur une bague filetée (40) vissée dans le carter de moyeu (2).

9. Moyeu selon la revendication précédente, sachant que la bague filetée (40) comporte sur la face extérieure axiale (40a) une cavité centrale (44) dans laquelle plonge sans contact une section conique (11c) constituée sur la face avant (10a) du rotor (10).

10. Moyeu selon l'une quelconque des deux revendications précédentes, sachant que la bague filetée (40) comporte sur la face intérieure (40b) axiale éloignée du rotor (10) une section d'appui (45), laquelle vient s'appliquer dans le carter de moyeu sur un logement (56) constitué de façon correspondante.

11. Moyeu selon l'une quelconque des trois revendications précédentes, sachant que la bague filetée (40) sur la face extérieure radiale est plus large (42) dans la direction axiale que sur la face intérieure radiale.

12. Moyeu selon l'une quelconque des trois revendications précédentes, sachant que le filetage extérieur (41) de la bague filetée (40) s'étend axialement vers l'extérieur au-delà du système à disques dentés (30) et jusque radialement sur le système à disques dentés (20) du côté rotor et couvre celui-ci en partie.

13. Moyeu selon l'une quelconque des revendications précédentes, sachant qu'au moins un système à disques dentés (20, 30) comporte un corps d'engrènement (21, 31) sur lequel la denture frontale (22, 32) est constituée sur une hauteur radiale (22b, 32b) et la denture radiale (23, 33) sur une longueur axiale (23a, 33a), sachant que la longueur axiale (23a, 33a) est plus grande que la hauteur radiale (22b, 32b),
et sachant qu'une extension radiale (21a, 31a) du corps d'engrènement (21, 31) est plus grande qu'au moins une largeur axiale (8b) d'un corps de roulement (8a),
et sachant que les corps de roulement (8a) du palier de moyeu du côté rotor (6) et du palier de rotor du côté moyeu (16) se trouvent respectivement dans un plan transversal (3, 4),
et sachant qu'une distance (3a) des deux plans transversaux (3, 4) est plus petite que la longueur axiale (23a, 33a) de la denture radiale (23, 33) d'un corps d'engrènement (21, 31) au moins d'un système à disque denté (20, 30).

14. Moyeu selon l'une quelconque des revendications précédentes, sachant que les corps de roulement (8a) du palier de moyeu du côté rotor (6) et du palier de rotor du côté moyeu (16) se trouvent respectivement dans un plan transversal (3, 4), et sachant qu'une distance (3a) des deux plans transversaux (3, 4) est plus petite qu'une largeur axiale (20b, 30b) des deux systèmes de disques dentés (20, 30) à l'état d'engrènement de la bague filetée (40).

15. Moyeu selon l'une quelconque des revendications précédentes, sachant que le système à disque denté du côté moyeu (30) et le système à disque denté du côté rotor (20) sont constitués pour l'essentiel de façon identique,
et sachant qu'aux deux systèmes de disques dentés (20, 30) est respectivement attribué au moins un dispositif de précontrainte (24, 34), lequel pour pousser les systèmes de disques dentés (10, 20) l'un sur l'autre de façon flottante et sachant que les deux dispositifs de précontrainte (24, 34) sont pour l'essentiel constitués de façon identique.
